(19) Europäisches Patentamt
European Patent Office
Office européen des brevets

(11) **EP 3 338 404 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(21) Anmeldenummer: **16775247.6**

(22) Anmeldetag: **30.09.2016**

(51) Int Cl.:
*H04L 12/10* *(2006.01)*    *H04L 12/40* *(2006.01)*

(86) Internationale Anmeldenummer:
**PCT/EP2016/073455**

(87) Internationale Veröffentlichungsnummer:
**WO 2017/055572 (06.04.2017 Gazette 2017/14)**

(54) **BUSSYSTEM**

BUS SYSTEM

SYSTÈME DE BUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2015 DE 102015116802**

(43) Veröffentlichungstag der Anmeldung:
**27.06.2018 Patentblatt 2018/26**

(73) Patentinhaber: **Beckhoff Automation GmbH 33415 Verl (DE)**

(72) Erfinder:
• **POHL, Christopher**
**33415 Verl (DE)**
• **VONNAHME, Erik**
**33154 Salzkotten (DE)**

(74) Vertreter: **Patentanwaltskanzlei WILHELM & BECK**
**Prinzenstraße 13**
**80639 München (DE)**

(56) Entgegenhaltungen:
**DE-A1-102011 087 828    US-A1- 2004 073 597 US-A1- 2011 217 873**

**Beschreibung**

Die Erfindung betrifft ein Bussystem, ein Eingabe-/Ausgabemodul, ein Datenkabel sowie ein Verfahren zum Betreiben eines Eingabe-/Ausgabemoduls und ein Computerprogramm.

Diese Patentanmeldung beansprucht die Priorität der deutschen Patentanmeldung 10 2015 116 802.2.

Moderne Konzepte in der industriellen Automatisierungstechnik, das heißt der Steuerung und Überwachung von technischen Prozessen mit Hilfe von Software, beruhen auf der Idee einer zentralen Steuerung mit verteilter Sensor-/Aktorebene. Die Teilnehmer kommunizieren dabei untereinander und mit übergeordneten Systemen über industrielle Datennetzwerke, im Weiteren auch als Automatisierungsnetzwerke bezeichnet.

Das Ethernet ist der am weitesten verbreitete Kommunikationsstandard in lokalen Netzwerken (LAN) und wird vor allem durch die IEEE-Norm 802.3 festgelegt. Das Ethernet basiert auf einem LAN-Aufbau, bei dem eine Mehrzahl von Steuerknoten, zum Beispiel Computer oder Maschinen, kabelgebunden miteinander verbunden sind, wobei das Ethernet-Protokoll die Verkapselung der zu übermittelnden Daten in Datenpaketen, im Weiteren auch als Telegramm bezeichnet, mit vorbestimmtem Format vornimmt. Es können dabei verschiedene Ethernet-Varianten eingesetzt werden, die sich in der Übertragungsrate, den verwendeten Kabeltypen und der Leitungscodierung unterscheiden.

Die Kommunikation zwischen den Teilnehmern läuft bei industriell eingesetzten Ethernet-Netzwerken in der Regel über eine vier Adern aufweisende Datenleitung, wobei die vier Adern oft als zwei verdrillte Adernpaare ausgeführt sind. Das Verdrillen der Adernpaare reduziert das Übersprechen. Die beiden Adern eines Adernpaares werden immer gemeinsam verwendet, wobei über jeweils ein Adernpaar ein differentielles Datensignal übertragen wird. Manchmal werden auch alle vier Adern zusammen verdrillt, was zwar zu Nachteilen bei der elektromagnetischen Verträglichkeit führt, aber den Vorteil einer höheren Flexibilität der Leitung hat.

Eine häufig zwingende Anforderung an Automatisierungsnetzwerke ist es, dass die Ausgänge einer Maschine, die Aktoren, jederzeit in einen sicheren Zustand gebracht werden können, ohne dabei die Möglichkeit zur Überwachung der Maschine zu verlieren. Die Sensoren und die Steuerung im Automatisierungsnetzwerk müssen deshalb unabhängig von den Aktoren betrieben werden können. Aus diesem Grund ist eine Energieversorgung der Aktoren in der Regel getrennt von der Energieversorgung der Sensoren bzw. der Steuerung ausgeführt, um ein Abschalten der Aktorversorgung unabhängig von der Sensoren- bzw. Steuerungsversorgung durchzuführen.

Die im Automatisierungsnetzwerk benötigten Energieversorgungsleitungen werden in der Regel unabhängig von der Datenleitung verlegt, was mindestens zwei dedizierte Verkabelungen mit der entsprechenden Kontakttechnik nötig macht. In der Industrieautomation ist es aber wünschenswert, stets eine möglichst kostengünstige und einfache Verkabelung im Automatisierungsnetzwerk zu erreichen. Dies ist insbesondere dann von Bedeutung, wenn aufgrund von Umgebungsanforderungen eine gute Schirmung, eine hohe Schutzklasse oder eine hohe Temperaturbeständigkeit für die Verkabelung erforderlich sind. Die Verkabelung ist deshalb oft für einen relevanten hohen Anteil der Systemkosten verantwortlich.

Ein Ansatz, um Kosten bei der Verkabelung zu sparen, besteht darin, die Stromversorgung und die Datenübertragung in einer Verkabelung zu kombinieren. So kann mit Hilfe des "Power over Ethernet"(PoE)-Standard über eine vieradrige Standard-Ethernet-Datenleitung zusätzlich zu den beiden differentiellen Datensignalen auf den zwei verdrillten Adernpaaren eine einzelne Spannung mit übertragen werden. Beim PoE-Standard wird hierfür ein speziell angepasster Ethernet-Übertrager verwendet, der die beiden für die Spannung benötigten Potentiale über eine Mittelanzapfung auf je einem Adernpaar anlegt. Da jedoch in der Industrieautomation häufig zwei getrennte Energieversorgungen erforderlich sind, eine für die Aktoren und die andere für die Sensoren bzw. die Steuerung, ist auch in einem PoE-System mit einer vieradrigen Datenleitung eine zusätzliche Verkabelung für eine zweite Energieversorgung erforderlich.

Das Konzept des PoE-Systems kann auf die Automatisierungstechnik übertragen werden, so dass einem Anwender die Möglichkeit geboten werden kann, automatisierungstechnische Geräte (zum Beispiel Eingabe-/Ausgabemodule) mit nur einer anstelle der sonst üblichen zwei Leitungen (Kommunikation und Spannungsversorgung) zu verbinden. Dazu werden Versorgungsspannung und Datensignal auf derselben Leitung übertragen und mit Hilfe einer elektronischen Schaltung voneinander getrennt.

Geräte, die diese Technologie beherrschen, dürfen nicht so ohne weiteres mit Geräten verbunden werden, die diese Technologie nicht beherrschen, da bei den diese Technologie nicht beherrschenden Geräten sonst an den Kommunikationskomponenten eine Versorgungsspannung anliegen würde, was zu (irreparablen) Schäden im Gerät führen kann.

Die Offenlegungsschrift US 2013/0093444 A1 und die Patentschrift US 6,218,930 B1 zeigen jeweils eine Möglichkeit, Fähigkeiten von entfernten Geräten zu detektieren. Die US 2011/0217873 A1 offenbart ein PoE-System, bei dem im Steckverbinder eine Power over Ethernet Funktionalität integriert und die Merkmale der Obergriffe der unabhängigen Ansprüche aufweist. Die DE10 2011 087 828 A1 beschreibt ein Power over Ethernet System für ein Fahrzeugnetzwerk, in welchem für die Ein- /Auskopplung von Daten und Gleichspannung in jedem der fünf Adernpaare jeweils zwei Kondensatoren bzw. Induktivitäten verwendet werden. Die US2004/073597 A1 zeigt eine aktive Power over Ethernet Netzwerkdose, die ihrerseits Daten und Gleichspannung empfängt und weitergeben kann. Die aktive Netzwerkdose kann auf Befehl die Gleichspannung schalten und den Netzwerkdatenverkehr überwachen.

Die der Erfindung zugrunde liegende Aufgabe ist darin zu sehen, ein effizientes Konzept bereitzustellen, mittels welchem sichergestellt werden kann, dass ein Eingabe-/Ausgabemodul über ein Datenkabel einem entfernten weiteren Eingabe-/Ausgabemodul, welches mit dem Eingabe-/Ausgabemodul über das Datenkabel verbunden ist, keine Versorgungsspannung bereitstellt, wenn das entfernte weitere Eingabe-/Ausgabemodul nicht dafür ausgebildet ist, über das Datenkabel eine elektrische Versorgungsspannung zu empfangen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Bussystem bereitgestellt, umfassend:

- ein zwei Adernpaare aufweisendes Datenkabel,
- wobei das Datenkabel einen ersten Teil einer elektrischen Steckverbindung umfasst, wobei der erste Teil vier erste elektrische Kontaktelemente umfasst, wobei
- die vier ersten elektrischen Kontaktelemente mit jeweils einer der Adern der zwei Adernpaare elektrisch verbunden sind,
- wobei das Datenkabel einen Kommunikationsteilnehmer aufweist,
- ein Eingabe-/Ausgabemodul,
- wobei das Eingabe-/Ausgabemodul eine erste Gleichspannungsversorgung, eine zweite Gleichspannungsversorgung, eine physikalische Schnittstelle, einen ersten Übertrager, einen zweiten Übertrager, eine erste induktive Baugruppe, eine zweite induktive Baugruppe, eine erste kapazitive Baugruppe, eine zweite kapazitive Baugruppe und einen zum ersten Teil der elektrischen Steckverbindung komplementären zweiten Teil aufweist, wobei der zweite Teil vier zweite elektrische Kontaktelemente umfasst,
- wobei die vier zweiten elektrischen Kontaktelemente jeweils einen elektrischen Kontakt umfassen,
- wobei die erste Gleichspannungsversorgung über die erste induktive Baugruppe mit einem jeweiligen elektrischen Kontakt von zwei der vier zweiten elektrischen Kontaktelemente verbunden ist,
- wobei die zweite Gleichspannungsversorgung über die zweite induktive Baugruppe mit einem jeweiligen elektrischen Kontakt von zwei anderen der vier zweiten elektrischen Kontaktelemente verbunden ist,
- wobei die physikalische Schnittstelle über den ersten Übertrager und über die erste kapazitive Baugruppe mit den jeweiligen elektrischen Kontakten von den zwei der vier zweiten elektrischen Kontaktelemente verbunden ist, um ein erstes differenzielles Datensignal an die zwei elektrischen Kontakte der zwei der vier zweiten elektrischen Kontaktelemente anzulegen,
- wobei die physikalische Schnittstelle über den zweiten Übertrager und über die zweite kapazitive Baugruppe mit den jeweiligen elektrischen Kontakten von den zwei anderen der vier zweiten elektrischen Kontaktelemente verbunden ist, um ein zweites differenzielles Datensignal an die zwei elektrischen Kontakte der zwei anderen der vier zweiten elektrischen Kontaktelemente anzulegen,
- wobei das Eingabe-/Ausgabemodul eine Mikrocontrollereinheit umfasst,
- wobei die Mikrocontrollereinheit ausgebildet ist, mit dem Kommunikationsteilnehmer des Datenkabels zu kommunizieren,
- wobei die Mikrocontrollereinheit ausgebildet ist, nur dann die erste und zweite Gleichspannungsversorgung derart anzusteuern, dass diese eine jeweilige Gleichspannung an die entsprechenden elektrischen Kontakte der vier zweiten elektrischen Kontaktelemente anlegen, wenn die Mikrocontrollereinheit mit dem Kommunikationsteilnehmer des Datenkabels kommunizieren konnte, so dass bei fehlender Kommunikation und/ oder fehlendem Kommunikationsteilnehmer im Datenkabel keine jeweilige Gleichspannung angelegt wird.

Nach noch einem Aspekt wird ein Eingabe-/Ausgabemodul für ein Bussystem bereitgestellt, umfassend:

- eine erste Gleichspannungsversorgung, eine zweite Gleichspannungsversorgung, eine physikalische Schnittstelle, einen ersten Übertrager, einen zweiten Übertrager, eine erste induktive Baugruppe, eine zweite induktive Baugruppe, eine erste kapazitive Baugruppe, eine zweite kapazitive Baugruppe und einen Teil einer elektrischen Steckverbindung, wobei der eine Teil vier elektrische Kontaktelemente umfasst,
- wobei die vier elektrischen Kontaktelemente jeweils einen elektrischen Kontakt umfassen,
- wobei die erste Gleichspannungsversorgung über die erste induktive Baugruppe mit einem jeweiligen elektrischen Kontakt von zwei der vier elektrischen Kontaktelemente verbunden ist,
- wobei die zweite Gleichspannungsversorgung über die zweite induktive Baugruppe mit einem jeweiligen elektrischen Kontakt von zwei anderen der vier elektrischen Kontaktelemente verbunden ist,
- wobei die physikalische Schnittstelle über den ersten Übertrager und über die erste kapazitive Baugruppe mit den jeweiligen elektrischen Kontakten von den zwei der vier elektrischen Kontaktelemente verbunden ist, um ein erstes differenzielles Datensignal an die zwei elektrischen Kontakte der zwei der vier elektrischen Kontaktelemente anzulegen,

- wobei die physikalische Schnittstelle über den zweiten Übertrager und über die zweite kapazitive Baugruppe mit den jeweiligen elektrischen Kontakten von den zwei anderen der vier elektrischen Kontaktelemente verbunden ist, um ein zweites differenzielles Datensignal an die zwei elektrischen Kontakte der zwei anderen der vier elektrischen Kontaktelemente anzulegen,
- wobei das Eingabe-/Ausgabemodul eine Mikrocontrollereinheit umfasst,
- wobei die Mikrocontrollereinheit ausgebildet ist, mit einem Kommunikationsteilnehmer eines Datenkabels zu kommunizieren,
- wobei die Mikrocontrollereinheit ausgebildet ist, nur dann die erste und zweite Gleichspannungsversorgung derart anzusteuern, dass diese eine jeweilige Gleichspannung an die entsprechenden elektrischen Kontakte der vier elektrischen Kontaktelemente anlegen, wenn die Mikrocontrollereinheit mit dem Kommunikationsteilnehmer des Datenkabels kommunizieren konnte, so dass bei fehlender Kommunikation und/ oder fehlendem Kommunikationsteilnehmer im Datenkabel keine jeweilige Gleichspannung angelegt wird.

Gemäß einem weiteren Aspekt wird ein Datenkabel für ein Bussystem bereitgestellt, umfassend:

- zwei Adernpaare,
- einen Teil einer elektrischen Steckverbindung, wobei der eine Teil vier elektrische Kontaktelemente umfasst,
- wobei die vier elektrischen Kontaktelemente mit jeweils einer der Adern der zwei Adernpaare elektrisch verbunden sind,
- wobei das Datenkabel einen Kommunikationsteilnehmer für eine Kommunikation mit einer Mikrocontrollereinheit eines Eingabe-/Ausgabemoduls aufweist.

Gemäß einem weiteren Aspekt wird ein Verfahren zum Betreiben des Eingabe-/Ausgabemoduls bereitgestellt, umfassend die folgenden Schritte:

- Prüfen mittels der Mikrocontrollereinheit, ob eine Kommunikationsverbindung von der Mikrocontrollereinheit zu einem Kommunikationsteilnehmer eines in den einen Teil der elektrischen Steckverbindung gesteckten Datenkabels aufgebaut werden kann,
- Ansteuern der Gleichspannungsversorgungen mittels der Mikrocontrollereinheit derart, dass die Gleichspannungsversorgungen nur dann an die entsprechenden elektrischen Kontakte der Kontaktelemente eine jeweilige Gleichspannung anlegen, wenn die Prüfung ergeben hat, dass eine Kommunikationsverbindung zu einem Teilnehmer des Datenkabels aufgebaut werden konnte.

Gemäß einem weiteren Aspekt wird ein Computerprogramm bereitgestellt, welches Programmcode zur Durchführung des Verfahrens zum Betreiben des Eingabe-/Ausgabemoduls umfasst, wenn das Computerprogramm auf einem Computer, insbesondere auf dem Eingabe-/Ausgabemodul, vorzugsweise auf der Mikrocontrollereinheit, ausgeführt wird.

Die Erfindung umfasst also insbesondere und unter anderem den Gedanken, einen Kommunikationsteilnehmer im Datenkabel vorzusehen, welches in den zweiten Teil der elektrischen Steckverbindung, zum Beispiel in eine Buchse, des Eingabe-/Ausgabemoduls gesteckt wird. Insofern kann in vorteilhafter Weise die Mikrocontrollereinheit mit dem Kommunikationsteilnehmer des Datenkabels kommunizieren. Sofern eine solche Kommunikation stattfinden konnte, das heißt also insbesondere, wenn ein Kommunikationsteilnehmer vorhanden ist, so ist dies ein Zeichen für die Mikrocontrollereinheit dafür, dass ein weiteres Eingabe-/Ausgabemodul, welches mittels des Datenkabels an das Eingabe-/Ausgabemodul angeschlossen wird respektive ist, über das Datenkabel sowohl differenzielle Datensignale als auch Gleichspannungen empfangen kann, ohne dass das weitere Eingabe-/Ausgabemodul aufgrund der angelegten oder übertragenen Gleichspannungen beschädigt oder zerstört wird. Die Mikrocontrollereinheit geht also bei einem Vorhandensein eines Kommunikationsteilnehmers im Datenkabel davon aus, dass das weitere Eingabe-/Ausgabemodul über eine so genannte "Power over Ethernet"-Funktionalität verfügt.

Sofern aber kein Kommunikationsteilnehmer im Datenkabel vorhanden ist, kann die Mikrocontrollereinheit auch keine Kommunikation zu einem solchen Kommunikationsteilnehmer aufbauen. Insofern kann keine Kommunikation zwischen der Mikrocontrollereinheit und einem Kommunikationsteilnehmer stattfinden. Dies ist dann für die Mikrocontrollereinheit ein Zeichen dafür, dass das weitere Eingabe-/Ausgabemodul, welches mittels des Datenkabels mit dem Eingabe-/Ausgabemodul verbunden ist respektive wird, keine "Power over Ethernet"-Funktionalität aufweist, also keine Gleichspannung über das Datenkabel zur Verfügung gestellt bekommen darf, da anderenfalls das weitere Eingabe-/Ausgabemodul beschädigt oder zerstört werden könnte. In einem solchen Fall steuert dann die Mikrocontrollereinheit die beiden Gleichspannungsversorgungen derart an, dass diese keine jeweilige Gleichspannung an die elektrischen Kontakte der vier zweiten Kontaktelemente anlegen.

Somit ist also über das Vorhandensein eines Kommunikationsteilnehmers im Datenkabel ein Kriterium definiert oder vorgegeben, basierend auf welchem effizient bestimmt oder ermittelt werden kann, ob über das Datenkabel auch Gleichspannungen übertragen werden dürfen. Somit kann also effizient sichergestellt werden, dass das Eingabe-/Ausgabemodul über das Datenkabel einem entfernten weiteren Eingabe-/Ausgabemodul, welches mit dem Eingabe-/Ausgabemodul über das Datenkabel verbunden ist, keine Versorgungsspannung bereitgestellt, wenn das entfernte weitere Eingabe-/Ausgabemodul nicht dafür ausgebildet ist, über das Datenkabel eine elektrische Versorgungsspannung zu empfangen. Somit können insbesondere in vorteilhafter Weise Beschädigungen am entfernten weiteren Eingabe-/Ausgabemodul oder eine Zerstörung des entfernten weiteren Eingabe-/Ausgabemoduls verhindert werden.

Das Bussystem ist nach einer Ausführungsform zum Einsatz in einer Industrieautomation ausgebildet. Das Bussystem ist somit nach einer Ausführungsform ein Bussystem einer Industrieautomation oder ein Bussystem für eine Industrieautomation.

Das Eingabe-/Ausgabemodul ist also insbesondere ausgebildet, über ein vieradriges Datenkabel sowohl differenzielle Datensignale als auch eine Spannungsversorgung bereitzustellen. Aufgrund des Vorsehens der induktiven und kapazitiven Baugruppe ist es in vorteilhafter Weise ermöglicht, zwei galvanisch getrennte Gleichspannungen an die vier Adern des Datenkabels anzulegen. Mit nur einer einzigen Verkabelung, also dem Datenkabel, können so in vorteilhafter Weise parallel zwei galvanisch getrennte Gleichströme zusätzlich zu zwei differenziellen Datensignalen auf den beiden Adernpaaren des Datenkabels übertragen werden. Eine Funktionalität des Bussystems wird so nicht verändert, so dass beliebige Busstrukturen wie Stern, Linie oder Ring möglich und nach anderen Ausführungsformen auch so vorgesehen sind.

Mit Hilfe der über das vieradrige Datenkabel geführten, zwei galvanisch voneinander getrennten Gleichströmen kann in vorteilhafter Weise eine separate Energieversorgung für Aktoren und/oder Sensoren und/oder einer Steuerung sichergestellt werden. Somit ist in vorteilhafter Weise ein Abschalten der Aktorversorgung unabhängig von der Sensorbeziehungsweise Steuerungsversorgung möglich, so dass die zwingende Anforderung in industriellen Automatisierungsnetzwerken, jederzeit in der Lage zu sein, die Ausgänge einer Maschine, das heißt die Aktoren, in einen sicheren Zustand bringen zu können, ohne dabei die Kommunikation mit der Maschine zu unterbrechen, das heißt die Sensoren beziehungsweise die Steuerung weiter ansprechen zu können, eingehalten werden kann.

Es ist somit zum Beispiel in vorteilhafter Weise ein Bussystem geschaffen, welches mehrere Eingabe-/Ausgabemodule umfasst, wobei diese mehreren Eingabe-/Ausgabemodule unterschiedliche Funktionalitäten aufweisen können: einige dieser Eingabe-/Ausgabemodule können eine so genannte "Power over Ethernet (PoE)"-Funktionalität aufweisen, das heißt eine Spannungsversorgung kann über die vier Adern des Datenkabels bereitgestellt werden, die auch die Datensignale übertragen. Andere der Eingabe-/Ausgabemodule weisen eine solche PoE-Funktionalität nicht auf und können dennoch an Eingabe-/Ausgabemodule mit PoE-Funktionalität angeschlossen werden, ohne Schaden zu nehmen. Diese Verbindung ist insbesondere durch geeignete mechanische Ausprägungen von Steckern und Buchsen nur mittels Datenkabeln ohne Kommunikationsteilnehmer möglich, so dass die Versorgungsspannungen nicht eingeschaltet werden.

Das heißt also insbesondere, dass erfindungsgemäß vorgesehen ist, dass das Datenkabel dazu dient, den angeschlossenen Teilnehmer, also das an das erfindungsgemäße Eingabe-/Ausgabemodul angeschlossene weitere Eingabe-/Ausgabemodul, dahingehend zu identifizieren, ob das erfindungsgemäße Eingabe-/Ausgabemodul dem weiteren Eingabe-/Ausgabemodul eine Gleichspannung über die vier Adern bereitstellen darf oder nicht. Das heißt also insbesondere, dass basierend auf dem Datenkabel entschieden wird, ob der entfernte Teilnehmer mit Gleichspannungen versorgt werden darf oder nicht. Das Vorhandensein eines Kommunikationsteilnehmers respektive eine erfolgreiche Kommunikation zwischen der Mikrocontrollereinheit und dem Kommunikationsteilnehmer, bewirkt, dass der entfernte Teilnehmer versorgt werden darf.

Nach einer Ausführungsform sind das erste differenzielle Datensignal und das zweite differenzielle Datensignal jeweils differenzielle Ethernet-Signale. Das Bussystem respektive das Eingabe-/Ausgabemodul eignet sich daher insbesondere zum Einsatz mit Ethernet als dem Kommunikationsstandard im Automatisierungsnetzwerk. Somit ist nach einer Ausführungsform ein Automatisierungsnetzwerk vorgesehen, welches das Bussystem umfasst.

In einer Ausführungsform des Bussystems ist vorgesehen, dass der erste Teil der elektrischen Steckverbindung als ein Stecker umfassend die vier ersten elektrischen Kontaktelemente ausgebildet ist, wobei die vier ersten elektrischen Kontaktelemente jeweils als elektrischer Kontaktstift ausgebildet sind, wobei der zweite Teil der elektrischen Steckverbindung als eine die vier zweiten elektrischen Kontaktelemente aufweisende Buchse ausgebildet ist, wobei die vier zweiten elektrischen Kontaktelemente jeweils als Kontaktkelch ausgebildet sind, oder umgekehrt.

In einer Ausführungsform des Eingabe-/Ausgabemoduls ist vorgesehen, dass der eine Teil der elektrischen Steckverbindung als ein Stecker umfassend die vier elektrischen Kontaktelemente ausgebildet ist, wobei die vier elektrischen Kontaktelemente jeweils als elektrischer Kontaktstift ausgebildet sind, oder dass der eine Teil der elektrischen Steckverbindung als eine die vier elektrischen Kontaktelemente aufweisende Buchse ausgebildet ist, wobei die vier elektrischen Kontaktelemente jeweils als Kontaktkelch ausgebildet sind.

In einer Ausführungsform des Datenkabels ist vorgesehen, dass der eine Teil der elektrischen Steckverbindung als ein Stecker umfassend die vier elektrischen Kontaktelemente ausgebildet ist, wobei die vier elektrischen Kontaktelemente jeweils als elektrischer Kontaktstift ausgebildet sind, oder dass der eine Teil der elektrischen Steckverbindung als eine die vier elektrischen Kontaktelemente aufweisende Buchse ausgebildet ist, wobei die vier elektrischen Kontaktelemente jeweils als Kontaktkelch ausgebildet sind.

Zur besseren Unterscheidbarkeit werden, wenn eine Ausführungsform des Bussystems beschrieben wird, der eine Teil der elektrischen Steckverbindung des Datenkabels als der erste Teil und die vier elektrischen Kontaktelemente des Datenkabels als vier erste elektrische Kontaktelemente bezeichnet werden, wobei der eine Teil der elektrischen Steckverbindung des Eingabe-/Ausgabemoduls als der zweite Teil bezeichnet wird und die vier elektrischen Kontaktelemente des Eingabe-/Ausgabemoduls als vier zweite elektrische Kontaktelemente bezeichnet werden.

Wenn im Folgenden in einer Ausführungsform das Datenkabel den Stecker aufweist und das Eingabe-/Ausgabemodul die Buchse aufweist, so soll stets der umgekehrt Fall mitgelesen werden, dass das Datenkabel die Buchse aufweist und das Eingabe-/Ausgabemodul den Stecker aufweist.

Nach einer Ausführungsform ist vorgesehen, dass die Mikrocontrollereinheit über den ersten Übertrager und die erste kapazitive Baugruppe mit den jeweiligen elektrischen Kontakten der zwei der vier zweiten elektrischen Kontaktelemente und/oder über den zweiten Übertrager und die zweite kapazitive Baugruppe mit den jeweiligen elektrischen Kontakten der anderen zwei der vier zweiten elektrischen Kontaktelemente verbunden ist, um an die entsprechenden elektrischen Kontakte Datensignale für eine Kommunikation mit dem Kommunikationsteilnehmer anlegen zu können,

- wobei der Kommunikationsteilnehmer mit zumindest einer der vier Adern der zwei Adernpaare verbunden ist, um im gesteckten Zustand die Datensignale der Mikrocontrollereinheit empfangen und/ oder Datensignale an die Mikrocontrollereinheit über die zumindest eine Ader senden zu können.

Dadurch wird insbesondere der technische Vorteil bewirkt, dass die Mikrocontrollereinheit effizient mit dem Kommunikationsteilnehmer über zumindest eine Ader kommunizieren kann. Die Kommunikation mit dem Kommunikationsteilnehmer ist somit eine drahtgebundene oder leitungsgebundene Kommunikation.

Nach einer Ausführungsform ist vorgesehen, dass der Kommunikationsteilnehmer über eine dritte kapazitive Baugruppe mit dem einen der zwei Adernpaare und über eine dritte induktive Baugruppe mit dem anderen der zwei Adernpaare verbunden ist.

Dadurch wird insbesondere der technische Vorteil bewirkt, dass aufgrund der Eigenschaft als Tiefpass die induktive Baugruppe dafür sorgt, dass sich der Kommunikationsteilnehmer und ein weiteres entferntes Eingabe-/Ausgabemodul, welches mittels des Datenkabels an das Eingabe-/Ausgabemodul angeschlossen ist, in ihrer Kommunikation mit dem Eingabe-/Ausgabemodul respektive Mikrocontrollereinheit nicht gegenseitig stören.

Datensignale, welche für das weitere Eingabe-/Ausgabemodul vorgesehen sind, werden somit in vorteilhafter Weise mittels der dritten induktiven Baugruppe weitestgehend herausgefiltert und können somit nicht mehr zum Kommunikationsteilnehmer gelangen, was anderenfalls zu einer gestörten Kommunikation führen könnte.

Aufgrund des Vorsehens der dritten kapazitiven Baugruppe ist in vorteilhafter Weise eine effiziente kapazitive Einkopplung von Datensignalen, die von der Mikrocontrollereinheit ausgesendet werden, in den Kommunikationsteilnehmer ermöglicht. Über die dritte kapazitive Baugruppe kann somit in vorteilhafter Weise ein Kommunikationskanal von der Mikrocontrollereinheit zum Kommunikationsteilnehmer ausgebildet werden.

Nach einer Ausführungsform ist vorgesehen, dass die Mikrocontrollereinheit ausgebildet ist, eine Versorgungsspannung für den Kommunikationsteilnehmer an elektrische Kontakte der zweiten elektrischen Kontaktelemente anzulegen, wobei die Versorgungsspannung kleiner ist als die mittels der ersten und zweiten Gleichspannungsversorgung an die elektrischen Kontakte der zweiten elektrischen Kontaktelemente anlegbaren Gleichspannungen. Die Versorgungsspannung, welche mittels der Mikrocontrollereinheit angelegt wird, kann im Folgenden auch als eine Messspannung bezeichnet werden.

Dadurch wird insbesondere der technische Vorteil bewirkt, dass ein eventuell inkompatibler Kommunikationsteilnehmer nicht zerstört wird. Über die Versorgungsspannung oder Messspannung ist es weiterhin in vorteilhafter Weise ermöglicht, den Kommunikationsteilnehmer mit elektrischer Energie zu versorgen. Dieser muss also keine eigene Strom- oder Spannungsversorgung aufweisen. Die Messspannung beträgt vorzugsweise maximal 5 V.

In einer anderen Ausführungsform ist vorgesehen, dass die Mikrocontrollereinheit ausgebildet ist, ein Standby-Signal an den Kommunikationsteilnehmer zu senden,

- wobei der Kommunikationsteilnehmer ausgebildet ist, ansprechend auf das Standby-Signal in einen Standby-Zustand zu wechseln.

Dadurch wird insbesondere der technische Vorteil bewirkt, dass ein Energieverbrauch des Kommunikationsteilnehmers gesenkt oder reduziert werden kann. Insbesondere kann somit in vorteilhafter Weise in einem normalen Betrieb des Bussystems verhindert werden, dass ein aktiver Kommunikationsteilnehmer, also ein angeschalteter oder nicht ausgeschalteter Kommunikationsteilnehmer, eine Kommunikation zwischen dem Eingabe-/Ausgabemodul und dem weiteren Eingabe-/Ausgabemodul stören kann. Der Standby-Zustand kann auch als ein Tiefschlafmodus bezeichnet werden.

Nach einer Ausführungsform ist vorgesehen, dass die Mikrocontrollereinheit ausgebildet ist, ein Aufwachsignal an den Kommunikationsteilnehmer zu senden, wobei der Kommunikationsteilnehmer ausgebildet ist, ansprechend auf das Aufwachsignal aus einem Standby-Zustand aufzuwachen. Ein Aufwachen heißt also insbesondere, dass der Kommunikationsteilnehmer wieder bereit für eine Kommunikation mit der Mikrocontrollereinheit ist.

Dadurch wird insbesondere der technische Vorteil bewirkt, dass der Kommunikationsteilnehmer effizient aufgeweckt werden kann, um wieder für eine Kommunikation mit der Mikrocontrollereinheit zur Verfügung zu stehen. Dies jedoch erst dann, wenn er das Aufwachsignal empfangen hat.

Nach einer weiteren Ausführungsform ist vorgesehen, dass der Kommunikationsteilnehmer einen Datenspeicher umfasst, in welchem ein elektronisches Datenblatt des Kommunikationsteilnehmers gespeichert ist,

- wobei die Mikrocontrollereinheit ausgebildet ist, das elektronische Datenblatt aus dem Datenspeicher auszulesen und einen Betrieb des Eingabe-/Ausgabemoduls basierend auf dem ausgelesenen Datenblatt zu steuern.

Dadurch wird insbesondere der technische Vorteil bewirkt, dass der Betrieb des Eingabe-/Ausgabemoduls effizient gesteuert werden kann. Denn eine Steuerung oder ein Betrieb des Eingabe-/Ausgabemoduls kann somit optimal auf das konkret benutzte Datenkabel abgestimmt werden.

Üblicherweise ist eine Kommunikation zwischen dem Eingabe-/Ausgabemodul und einem weiteren Eingabe-/Ausgabemodul insbesondere abhängig von Eigenschaften des Datenkabels, welches die beiden Eingabe-/Ausgabemodule miteinander verbindet. Zum Beispiel bewirken längere Kabel in der Regel eine höhere Dämpfung der übertragenen Datensignale als kürzere Kabel. Sofern also ein solches Wissen zur Verfügung steht, kann dies in der Kommunikation effizient dahingehend berücksichtigt werden, dass eine Kommunikation an unterschiedliche Kabellängen angepasst werden kann.

Nach einer Ausführungsform umfasst das elektronische Datenblatt eine oder mehrere der folgenden Merkmale: Kompatibilitätsinformation, elektrische Eigenschaft, mechanische Eigenschaft.

Die Kompatibilitätsinformation gibt insbesondere an, ob das entfernte weitere Eingabe-/Ausgabemodul ausgebildet ist, über die vier Adern des Datenkabels eine Gleichspannung oder Gleichspannungen zu empfangen oder nicht.

Eine elektrische Eigenschaft ist zum Beispiel eine Dämpfung, ein Frequenzgang, ein maximaler Strom oder eine maximale Spannung, welche über die Adern des Datenkabels übertragen werden dürfen, oder ein Isolationswiderstand. Insbesondere sind mehrere der vorstehend genannten elektrischen Eigenschaften vom Datenblatt umfasst.

Eine mechanische Eigenschaft ist zum Beispiel eine Längen- oder eine Querschnittsinformation, also eine Längen- oder Querschnittsangabe des Datenkabels, ein minimaler Biegeradius des Datenkabels, ein Aussendurchmesser, eine Schleppkettentauglichkeit oder eine Widerstandsfähigkeit gegen Umwelteinflüsse und/oder Chemikalien. Die Widerstandsfähigkeit ist zum Beispiel gemäß einer IP-Schutzklasse definiert. Die Schleppkettentauglichkeit gibt zum Beispiel an, ob das Datenkabel innerhalb eines flexiblen Kabelkanals - der Schleppkette oder Energieführungskette - einzeln oder gemeinsam mit anderen Kabeln geführt werden kann, und dafür insbesondere eine ausreichende Bewegungsrobustheit aufweist.

Insbesondere ist vorgesehen, dass mehrere der vorstehend genannten mechanischen Eigenschaften vom Datenblatt umfasst sind.

Nach einer Ausführungsform ist vorgesehen, dass der Kommunikationsteilnehmer als eine weitere Mikrocontrollereinheit oder als ein programmierbarer Nur-Lese-Speicher ausgebildet ist.

Durch das Vorsehen einer weiteren Mikrocontrollereinheit als Kommunikationsteilnehmer wird insbesondere der technische Vorteil bewirkt, dass in der Regel eine Mikrocontrollereinheit die Fähigkeit hat, nach einer Kommunikation in einen Tiefschlafmodus (Standby-Modus) zu fallen und somit eine Kommunikation zwischen dem Eingabe-/Ausgabemodul und dem weiteren Eingabe-/Ausgabemodul auf keinen Fall zu stören. Ferner kann die weitere Mikrocontrollereinheit in vorteilhafter Weise grundlegende Informationen, aufzeichnen, was auch als loggen bezeichnet werden kann, zum Beispiel die Anzahl von Schleppkettenzyklen, Einschaltzyklen, die Temperatur oder an welchen Eingabe-/Ausgabemodulen das Datenkabel bisher angeschlossen war (zum Beispiel Typ und/oder Seriennummer der Eingabe-/Ausgabemodulen, an welchen das Datenkabel bisher angeschlossen war).

Das Vorsehen eines programmierbaren Nur-Lese-Speichers als Kommunikationsteilnehmer bewirkt insbesondere den technischen Vorteil, dass ein einfaches elektrisches Bauelement als Kommunikationsteilnehmer verwendet wird. Ein programmierbarer Nur-Lese-Speicher ist in der Regel in vorteilhafter Weise ein einfach herzustellendes Bauelement, was darüber hinaus noch kostengünstig ist. Darüber hinaus ist ein programmierbarer Nur-Lese-Speicher in der Regel technisch weniger aufwändig ausgebildet als eine Mikrocontrollereinheit, weist also eine geringere technische Komplexität auf. Dies macht einen Nur-Lese-Speicher besonders robust und wenig fehleranfällig.

Ein programmierbarer Nur-Lese-Speicher wird im Englischen als "Programmable Read Only Memory (PROM)" bezeichnet. Der Nur-Lese-Speicher ist nach einer Ausführungsform als ein löschbarer programmierbarer Nur-Lese-Speicher ausgebildet. Ein solcher löschbarer programmierbarer Nur-Lese-Speicher wird im Englischen als "Erasable Programmable Read Only Memory (EPROM)" bezeichnet. Nach einer Ausführungsform ist der Nur-Lese-Speicher als ein elektrisch löschbarer programmierbarer Nur-Lese-Speicher ausgebildet. Ein solcher elektrisch löschbarer programmierbarer Nur-Lese-Speicher wird im Englischen als "Electrically Erasable Programmable Read Only Memory (EEPROM)" bezeichnet.

Ausführungsformen hinsichtlich des Bussystems respektive des Eingabe-/Ausgabemoduls respektive des Datenkabels respektive des Verfahrens ergeben sich analog aus entsprechenden Ausführungsformen hinsichtlich des Verfahrens respektive des Datenkabels respektive des Eingabe-/Ausgabemoduls respektive des Bussystems.

Nach einer Ausführungsform ist vorgesehen, dass das Eingabe-/Ausgabemodul ausgebildet oder eingerichtet ist, das Verfahren zum Betreiben eines Eingabe-/Ausgabemoduls aus- oder durchzuführen.

Bei dem Datenkabel für ein Bussystem handelt sich nach einer Ausführungsform um das Datenkabel aus dem erfindungsgemäßen Bussystem.

Nach einer Ausführungsform handelt es sich bei dem Eingabe-/Ausgabemodul um das Eingabe-/Ausgabemodul des erfindungsgemäßen Bussystems.

Nach einer Ausführungsform ist vorgesehen, dass die Mikrocontrollereinheit über den ersten Übertrager und die erste kapazitive Baugruppe mit den jeweiligen elektrischen Kontakten der zwei der vier zweiten elektrischen Kontaktelemente und/oder über den zweiten Übertrager und die zweite kapazitive Baugruppe mit den jeweiligen elektrischen Kontakten der anderen zwei der vier zweiten elektrischen Kontaktelemente verbunden ist, um an die entsprechenden elektrischen Kontakte Datensignale für eine Kommunikation mit dem Kommunikationsteilnehmer anlegen zu können.

Nach einer weiteren Ausführungsform ist vorgesehen, dass die Mikrocontrollereinheit ausgebildet ist, eine Versorgungsspannung für den Kommunikationsteilnehmer an elektrische Kontakte der elektrischen Kontaktelemente anzulegen, wobei die Versorgungsspannung (auch Messspannung genannt) kleiner ist als die mittels der ersten und zweiten Gleichspannungsversorgung an die elektrischen Kontakte der elektrischen Kontaktelemente anlegbaren Gleichspannungen. Alternativ ist nach einer Ausführungsform vorgesehen, dass die beiden Spannungen (Messspannung und Versorgungsspannung) gleich sind, wobei in einer weiteren Ausführungsform ein der jeweiligen Spannung entsprechender elektrischer Strom unterschiedlich ist. Der Messstrom ist auf sichere Werte begrenzt, um eine Zerstörung auszuschließen. Der Versorgungsstrom ist größer als der Messstrom.

Nach einer weiteren Ausführungsform ist vorgesehen, dass die Mikrocontrollereinheit ausgebildet ist, ein Standby-Signal an den Kommunikationsteilnehmer zu senden.

Nach noch einer Ausführungsform ist vorgesehen, dass die Mikrocontrollereinheit ausgebildet ist, ein elektronisches Datenblatt aus einem Datenspeicher des Kommunikationsteilnehmers auszulesen und einen Betrieb des Eingabe-/Ausgabemoduls basierend auf dem ausgelesenen Datenblatt zu steuern.

In einer weiteren Ausführungsform ist vorgesehen, dass der Kommunikationsteilnehmer mit zumindest einer der vier Adern der zwei Adernpaare verbunden ist, um im gesteckten Zustand die Datensignale der Mikrocontrollereinheit über die zumindest eine Ader empfangen und/ oder Datensignale an die Mikrocontrollereinheit über die zumindest eine Ader senden zu können.

In einer anderen Ausführungsform ist vorgesehen, dass der Kommunikationsteilnehmer über eine dritte kapazitive Baugruppe mit dem einen der zwei Adernpaare und über eine dritte induktive Baugruppe mit dem anderen der zwei Adernpaare verbunden ist.

Nach einer anderen Ausführungsform ist vorgesehen, dass der Kommunikationsteilnehmer ausgebildet ist, ansprechend auf ein Standby-Signal in einen Standby-Zustand zu wechseln.

Nach einer weiteren Ausführungsform ist vorgesehen, dass der Kommunikationsteilnehmer als eine weitere Mikrocontrollereinheit oder als ein programmierbarer Nur-Lese-Speicher ausgebildet ist.

Das elektronische Datenblatt umfasst nach einer Ausführungsform Parameter zum Bestimmen der Versorgungsspannung(en). Parameter sind zum Beispiel: Spannung, maximaler elektrischer Dauerstrom, maximaler elektrischer Überstrom, maximale elektrische Leistung, Art der Versorgungsspannung (AC oder DC).

Das heißt, dass nach einer Ausführungsform das Auslesen des Datenblatts umfasst, dass die Parameter ausgelesen werden, um die Versorgungsspannung(en) zu bestimmen und dann entsprechend anzulegen.

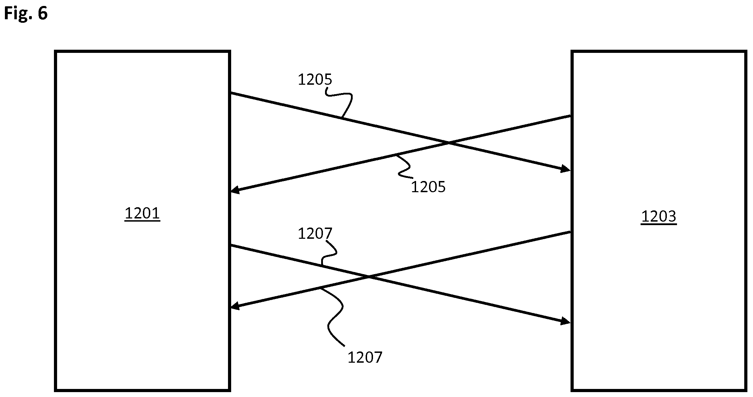

Das elektronische Datenblatt umfasst nach einer Ausführungsform einen Typ des Datenkabels. Über den Typ des Datenkabels (Datenkabeltyp) kann in vorteilhafter Weise bestimmt werden, welches Datenübertragungsverfahren verwendet werden soll (vgl. nachstehende Ausführungen im Zusammenhang mit den Figuren 6 bis 9).

Das Datenkabel umfasst nach einer Ausführungsform zusätzlich zu den vier Adern noch eine oder mehrere weitere Adern. Über diese weiteren Adern können zum Beispiel zusätzliche Versorgungsspannungen (zum Beispiel AC-Spannungen) bereitgestellt werden. Diese zusätzlichen Versorgungsspannungen werden in einer weiteren Ausführungsform über Parameter parametriert, die zum Beispiel im elektronischen Datenblatt gespeichert sind. Bei den Parametern handelt es sich zum Beispiel um die vorstehend beschriebenen Parametern.

Zum Beispiel entspricht nach einer Ausführungsform eine Steckerbelegung oder eine Steckerkonfiguration dem EtherCATp Stecker.

In einer Ausführungsform wird das elektronische Datenblatt von zwei Teilnehmern (Eingabe-/Ausgabemodul und ein weiteres entferntes Eingabe-/Ausgabemodul), die an beiden Kabelenden des Datenkabels angeschlossen sind (also mittels des Datenkabels miteinander verbunden sind), ausgelesen. Hierfür ist zum Beispiel ein Zugriffsmechanismus oder ein Zugriffsverfahren (zum Beispiel CSMA/CD: "Carrier Sense Multiple Access/Collision Detection",) vorgesehen.

Das heißt, dass ein erfindungsgemäßer Grundgedanke insbesondere darin zu sehen ist, dass das elektronische Datenblatt Parameter und/oder Informationen vorgibt, basierend auf welchen zum Beispiel entschieden wird, welches Datenübertragungsverfahren zwischen den beiden Teilnehmern verwendet wird.

Die Erfindung wird im Folgenden anhand von bevorzugten Ausführungsbeispielen näher erläutert. Hierbei zeigen

Fig. 1     ein Bussystem,

Fig. 2     einen vergrößerten Ausschnitt aus dem Bussystem der Fig. 1,

Fig. 3     ein Ablaufdiagramm eines Verfahrens zum Betreiben eines Eingabe-/Ausgabemoduls,

Fig. 4     ein Blockdiagramm einer Ethernet-Anschaltung,

Fig. 5     ein Blockdiagramm einer umschaltbaren Ethernet-Anschaltung,

Fig. 6     ein Blockdiagramm zum Ermitteln einer Signallaufzeit zwischen zwei Teilnehmern eines Bussystems,

Fig. 7     ein Blockdiagramm eines GBus,

Fig. 8     ein Blockdiagramm eines GBus-Wandlers und

Fig. 9     ein Blockdiagramm eines umschaltbaren GBus-Wandlers.

Im Folgenden können für gleiche Merkmale gleiche Bezugszeichen verwendet werden.

Des Weiteren ist der Übersicht halber vorgesehen, dass nicht in allen Zeichnungen stets alle Merkmale eingezeichnet sind. Teilweise wird zum Beispiel für eine Gruppe von Merkmalen ein Platzhalter in Form eines geometrischen Objekts verwendet.

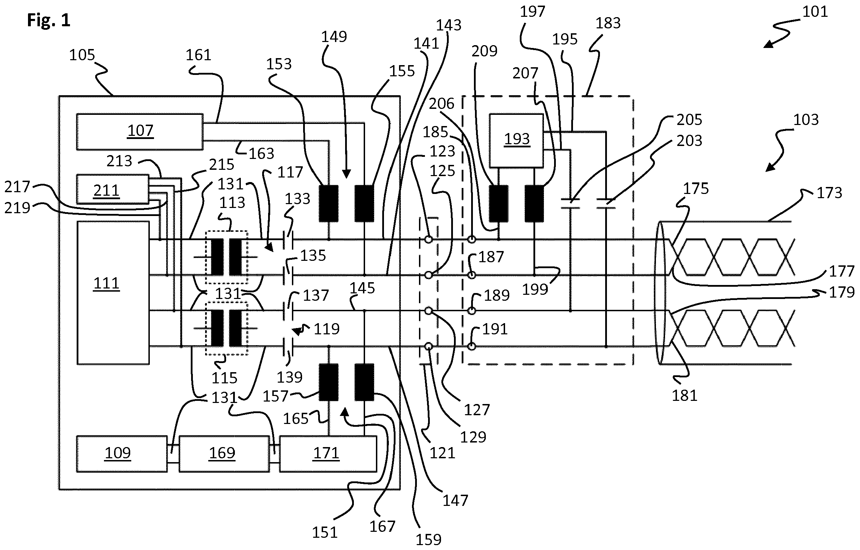

Fig. 1 zeigt ein Bussystem 101.

Das Bussystem 101 umfasst ein Datenkabel 103 sowie ein Eingabe-/Ausgabemodul 105.

Das Datenkabel 103 und das Eingabe-/Ausgabemodul 105 sind, obwohl in den Figuren gemeinsam gezeigt, auch als solche für sich einzeln offenbart.

Das Eingabe-/Ausgabemodul 105 umfasst eine erste Gleichspannungsversorgung 107 und eine zweite Gleichspannungsversorgung 109. Die erste Gleichspannungsversorgung 107 kann zum Beispiel einen oder mehrere Sensoren und/oder einen Bus mit einer elektrischen Gleichspannung versorgen. Das heißt also, dass die erste Gleichspannungsversorgung 107 zum Beispiel als eine Sensor- und Busversorgung ausgebildet ist respektive für eine Sensor- und Busversorgung verwendet wird.

Die zweite Gleichspannungsversorgung 109 kann zum Beispiel eine Aktorik versorgen. Das heißt also, dass die zweite Gleichspannungsversorgung 109 für eine Aktorikversorgung verwendet wird respektive als eine Aktorikversorgung ausgebildet ist.

Das Eingabe-/Ausgabemodul 105 umfasst eine physikalische Schnittstelle 111, die als eine so genannte Ethernet Physical Layer (PHY) ausgebildet ist. Die physikalische Schnittstelle 111 übernimmt eine Codierung respektive Decodierung von Daten. Die physikalische Schnittstelle 111 stellt somit ein erstes und ein zweites differenzielles Datensignal zur Verfügung, welches über das Datenkabel 103 übertragen werden kann, was nachfolgend weiter erläutert wird.

Das Eingabe-/Ausgabemodul 105 umfasst eine Buchse 121 umfassend vier Kontaktkelche (nicht gezeigt), die jeweils einen elektrischen Kontakt 123, 125, 127, 129 aufweisen.

Das Eingabe-/Ausgabemodul 105 umfasst ferner einen ersten Übertrager 113 und einen zweiten Übertrager 115. Das erste differenzielle Datensignal wird über den ersten Übertrager 113 zu den zwei elektrischen Kontakten 123, 125 der Buchse 121 übertragen. Das zweite differenzielle Datensignal wird von der physikalischen Schnittstelle 111 über den zweiten Übertrager 115 zu den elektrischen Kontakten 127, 129 der Buchse 121 übertragen.

Ferner umfasst das Eingabe-/Ausgabemodul 105 eine erste kapazitive Baugruppe 117 und eine zweite kapazitive Baugruppe 119. Die erste kapazitive Baugruppe 117 umfasst zwei Kondensatoren 133, 135. Die zweite kapazitive Baugruppe 119 umfasst zwei Kondensatoren 137, 139.

Hierbei ist die erste kapazitive Baugruppe 117 zwischen dem ersten Übertrager 113 und den beiden elektrischen Kontakten 123, 125 der Buchse 121 geschaltet. Die zweite kapazitive Baugruppe 119 ist zwischen dem zweiten Übertrager 115 und den zwei elektrischen Kontakten 127, 129 der Buchse 121 geschaltet.

Zur besseren Unterscheidung wird der elektrische Kontakt 123 als der erste elektrische Kontakt bezeichnet. Der elektrische Kontakt 125 wird als der zweite elektrische Kontakt bezeichnet. Der elektrische Kontakt 127 wird als der dritte elektrische Kontakt bezeichnet. Der elektrische Kontakt 129 wird als der vierte elektrische Kontakt bezeichnet. Die physikalische Schnittstelle 111 ist mit dem ersten Übertrager 113 mittels zwei elektrischen Leitungen 131 verbunden. Der erste Übertrager 113 ist mit den beiden Kondensatoren 133, 135 der ersten kapazitive Baugruppe 117 jeweils mit zwei elektrischen Leitungen 131 verbunden. Das heißt, dass eine elektrische Leitung 131 vom ersten Übertrager 113 zum Kondensator 133 verläuft. Eine elektrische Leitung 131 verläuft weiter vom ersten Übertrager 113 zum Kondensator 135.

Der Kondensator 133 ist dann mittels einer elektrischen Leitung 141 mit dem ersten elektrischen Kontakt 123 verbunden. Der Kondensator 135 ist mit einer elektrischen Leitung 143 mit dem zweiten elektrischen Kontakt 125 verbunden.

Analog zum ersten Übertrager 113 ist auch der zweite Übertrager 115 mittels zwei elektrischen Leitungen 131 mit der physikalischen Schnittstelle 111 verbunden. Eine elektrische Leitung 131 verbindet ferner den zweiten Übertrager 115 mit dem Kondensator 137 der zweiten kapazitiven Baugruppe 119. Eine elektrische Leitung 131 verbindet ferner den zweiten Übertrager 115 mit dem Kondensator 139 der zweiten kapazitiven Baugruppe 119.

Der Kondensator 137 ist dann mit einer elektrischen Leitung 145 mit dem dritten elektrischen Kontakt 127 verbunden. Der Kondensator 139 ist mittels einer Leitung 147 mit dem vierten elektrischen Kontakt 129 verbunden.

Somit ist die physikalische Schnittstelle 111 über den ersten Übertrager 113 und über die erste kapazitive Baugruppe 117 mit zwei der vier elektrischen Kontakte der Buchse 121 verbunden, um ein erstes differenzielles Datensignal an die zwei elektrischen Kontakte 123, 125 anzulegen respektive anlegen zu können.

Die physikalische Schnittstelle 111 ist weiterhin über den zweiten Übertrager 115 und über die zweite kapazitive Baugruppe 119 mit den zwei jeweiligen elektrischen Kontakten 127, 129 von den zwei anderen der vier elektrischen Kontakte verbunden, also mit dem dritten elektrischen Kontakt 127 und mit dem vierten elektrischen Kontakt 129 der Buchse 121, um ein zweites differenzielles Datensignal an die zwei elektrischen Kontakte 127, 129 anzulegen.

Das Eingabe-/Ausgabemodul 105 umfasst ferner eine erste induktive Baugruppe 149 und eine zweite induktive Baugruppe 151. Die erste induktive Baugruppe 149 umfasst zwei Induktivitäten 153, 155, die zum Beispiel als Spulen ausgebildet sind. Die zweite induktive Baugruppe 151 umfasst zwei Induktivitäten 157, 159, die zum Beispiel als Spulen ausgebildet sind. Die erste Gleichspannungsversorgung 107 ist über eine elektrische Leitung 161 mit der elektrischen Leitung 143 und somit mit dem zweiten elektrischen Kontakt 125 verbunden. Hierbei ist vorgesehen, dass die Induktivität 155 der ersten induktiven Baugruppe 149 in der elektrischen Leitung 161 geschaltet ist.

Die erste Gleichspannungsversorgung 107 ist ferner mit einer elektrischen Leitung 163 mit der elektrischen Leitung 141 und somit mit dem ersten elektrischen Kontakt 123 verbunden. Hierbei ist die Induktivität 153 der ersten induktiven Baugruppe 149 in der elektrischen Leitung 163 geschaltet.

Somit ist die erste Gleichspannungsversorgung 107 über die erste induktive Baugruppe 149 mit den zwei elektrischen Kontakten 123, 125 der Buchse 121 verbunden. Somit kann die erste Gleichspannungsversorgung 107 eine Gleichspannung an die beiden elektrischen Kontakte 123, 125 anlegen.

Die zweite Gleichspannungsversorgung 109 ist mittels zwei Leitungen 131 mit einem prellarmen Schalter 169 verbunden. Der prellarme Schalter 169 ist mittels zweier Leitungen 131 mit einer Strombegrenzung 171 verbunden. Die Strombegrenzung 171 ist mittels einer elektrischen Leitung 165 mit der elektrischen Leitung 147 und somit mit dem vierten elektrischen Kontakt 129 verbunden. Die Strombegrenzung 171 ist ferner mittels einer Leitung 167 mit der elektrischen Leitung 145 und somit mit dem elektrischen Kontakt 127 der Buchse 121 verbunden.

In der Leitung 165 ist die Induktivität 157 der zweiten induktiven Baugruppe 151 geschaltet. In der Leitung 167 ist die Induktivität 159 der zweiten induktiven Baugruppe 151 geschaltet.

Somit ist also die zweite Gleichspannungsversorgung 109 für die Aktorik mittelbar über den prellarmen Schalter 169 und die Strombegrenzung 171 über die zweite induktive Baugruppe 151 mit dem dritten elektrischen Kontakt 127 und dem vierten elektrischen Kontakt 129 verbunden. Dadurch kann also die zweite Gleichspannungsversorgung 109 eine Gleichspannung an die beiden elektrischen Kontakte 127, 129 anlegen. Somit ist also die zweite Gleichspannungsversorgung 109 über die zweite induktive Baugruppe 151 mit zwei elektrischen Kontakten 127, 129 verbunden, um an diese eine Gleichspannung anzulegen.

Der prellarme Schalter 169 ist nach einer allgemeineren Ausführungsform als ein Schalter ausgebildet. Das Vorsehen eines solchen Schalters, insbesondere des Schalters 169, ist insbesondere zum Einsatz des Bussystems 101 in der Industrieautomation notwendig, um eine Energieversorgung der Aktoren im Bussystem über das Datenkabel 103 schaltbar auszugestalten. Somit kann in vorteilhafter Weise eine Aktorik unabhängig von einer Sensor- und Busversorgung abgeschaltet werden. Durch das Abschalten der Aktorikversorgung können die Aktoren im Automatisierungsnetzwerk in einen sicheren Zustand gebracht werden, ohne dabei eine Kommunikation unterbrechen zu müssen. Die Sensoren beziehungsweise eine Steuerung (nicht gezeigt) des Automatisierungsnetzwerks können weiter über die erste Gleichspannungsversorgung 107 mit einer Gleichspannung beliefert werden.

Dass der Schalter zum Beispiel nach einer Ausführungsform als ein prellarmer Schalter 169 ausgebildet ist, bewirkt insbesondere den technischen Vorteil, dass verhindert werden kann, dass der Schalter beim Betätigen aufgrund des mechanischen Aufbaus mehrfach schließt und öffnet. Ein solches mehrfaches Schließen und Öffnen kann zu einem erhöhten Kontaktabrieb und damit zu einem schnellen Ausfall führen, insbesondere dann, wenn gleichzeitig hohe Überströme auftreten. Der prellarme Schalter 169 ist zum Beispiel als ein Halbleiter-Relais ausgebildet.

Der Strombegrenzer oder die Strombegrenzung 171 bewirkt in vorteilhafter Weise, dass verhindert werden kann, dass Schaltvorgänge der Aktorversorgung eine Datenkommunikation über das Datenkabel 103 stören. Mittels der Strombegrenzung 171 kann also in vorteilhafter Weise verhindert werden, dass ein beim Einschaltvorgang kurzfristig auftretender hoher Anlaufstrom eines Verbrauchermoduls, welches über das Datenkabel 103 dem Eingabe-/Ausgabemodul 105 nachgeschaltet ist, einen zulässigen Sättigungsstrom der Induktivitäten 157, 159 der zweiten induktiven Baugruppe 151 übersteigt, so dass die Induktivitäten 157, 159 ihre induktiven Eigenschaften vollständig verlieren würden. Dadurch könnte zum Beispiel ein differenzielles Datensignal, welches an die elektrischen Kontakte 127, 129 anlegt würde, massiv beeinflusst werden, was eine Kommunikation stören würde.

In nicht gezeigten Ausführungsformen sind der prellarme Schalter 169 respektive die Strombegrenzung 171 nicht vorgesehen.

Das Datenkabel 103 umfasst eine Ummantelung 173, in welcher vier Adern 175, 177, 179, 181 verlaufen. Die Ummantelung 173 bewirkt eine elektrische Isolierung der vier Adern 175, 177, 179, 181 von einer Umgebung des Datenkabels 103 und wirkt zum Beispiel gleichzeitig als eine Schirmung.

Die vier Adern 175, 177, 179, 181 bilden zwei Adernpaare. Hierbei sind die Adern 175, 177 als ein verdrilltes Adernpaar ausgebildet, welches nachfolgend auch als ein erstes Adernpaar bezeichnet werden kann. Die Adern 179, 181 sind als ein verdrilltes Adernpaar ausgebildet, welches nachfolgend auch als zweites Adernpaar bezeichnet werden kann.

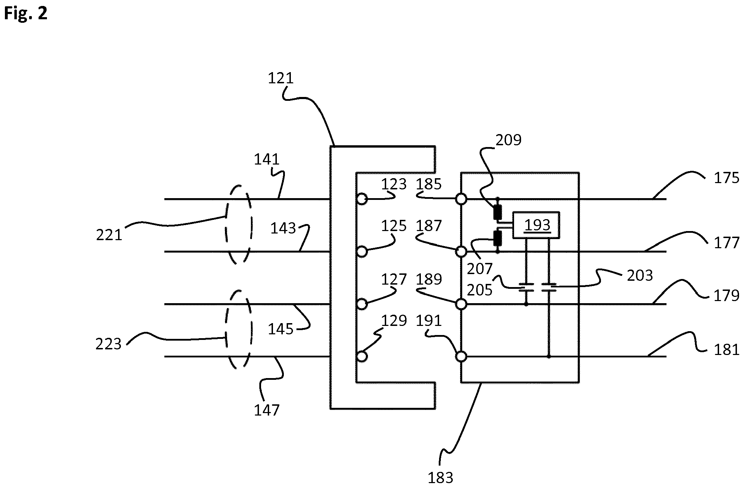

Das Datenkabel 103 umfasst ferner, wie in Fig. 2 gezeigt, einen Stecker 183. Der Stecker 183 umfasst vier elektrische Kontaktstifte 185, 187, 189, 191. Eine geometrische Anordnung und Größe der elektrischen Kontaktstifte 185, 187, 189, 191 sind entsprechend der geometrischen Größe der Buchse 121 und der Anordnung der elektrischen Kontakte 123, 125, 127, 129 ausgebildet. Das heißt also, dass der Stecker 183 ausgebildet ist, in die Buchse 121 gesteckt zu werden respektive, dass die Buchse 121 ausgebildet ist, den Stecker 183 aufzunehmen.

Im gesteckten Zustand kontaktieren die elektrischen Kontaktstifte 185, 187, 189, 191 die vier elektrischen Kontakte 123, 125, 127, 129.

Für eine bessere Unterscheidung wird der elektrische Kontaktstift 185 als der erste elektrische Kontaktstift bezeichnet. Der elektrische Kontaktstift 187 wird als der zweite elektrische Kontaktstift bezeichnet. Der elektrische Kontaktstift 189 wird als der dritte elektrische Kontaktstift bezeichnet. Der elektrische Kontaktstift 191 wird als der vierte elektrische Kontaktstift bezeichnet.

Im gesteckten Zustand kontaktiert der erste elektrische Kontaktstift 185 den ersten elektrischen Kontakt 123. Der zweite elektrische Kontaktstift 187 kontaktiert den zweiten elektrischen Kontakt 125 im gesteckten Zustand. Der dritte elektrische Kontaktstift 189 kontaktiert im gesteckten Zustand den dritten elektrischen Kontakt 127. Der vierte elektrische Kontaktstift 191 kontaktiert im gesteckten Zustand den elektrischen Kontakt 129.

Die Ader 175 des ersten Adernpaares ist mit dem ersten elektrischen Kontaktstift 185 verbunden. Die Ader 177 des ersten Adernpaares ist mit dem zweiten elektrischen Kontaktstift 187 verbunden. Die Ader 179 des zweiten Adernpaares ist mit dem dritten elektrischen Kontaktstift 189 verbunden. Die Ader 181 des zweiten Adernpaares ist mit dem vierten elektrischen Kontaktstift 191 verbunden.

Somit kann also eine Gleichspannung, die an die beiden elektrischen Kontakte 123, 125 angelegt wird, im gesteckten Zustand über das erste Adernpaar übertragen werden. Eine mittels der zweiten Gleichspannungsversorgung 109 an die elektrischen Kontakte 127, 129 angelegte Gleichspannung kann im gesteckten Zustand über die Adern des zweiten Adernpaares übertragen werden. Übertragen bedeutet hier, dass die Gleichspannungen mittels des Datenkabels 103 an ein Verbrauchermodul (nicht gezeigt) übertragen werden können, welches mittels des Datenkabels mit dem Eingabe-/Ausgabemodul 105 verbunden ist. Das Verbrauchermodul (nicht gezeigt) ist zum Beispiel zumindest teilweise analog zum Eingabe-/Ausgabemodul 105 ausgebildet. Das heißt, dass ein solches Verbrauchermodul analog zum Eingabe-/Ausgabemodul 105 eine entsprechende Buchse 121 aufweist, damit das Datenkabel 103 mittels eines zweiten Steckers (nicht gezeigt) mit dem Verbrauchermodul (nicht gezeigt) verbunden werden kann. Auch das Verbrauchermodul weist eine physikalische Schnittstelle und kapazitive und induktive Baugruppen auf, um über entsprechende Leitungen sowohl eine Gleichspannung als auch ein Datensignal respektive Gleichspannungen und Datensignale empfangen zu können. Das nicht gezeigte Verbrauchermodul umfasst insbesondere eine zweite Buchse, an der wiederum ein Datenkabel angeschlossen werden kann, um noch ein drittes nicht gezeigtes Verbrauchermodul anzuschließen. Das nicht gezeigte zweite Verbrauchermodul ist zum Beispiel ausgebildet, eine Gleichspannung oder Gleichspannungen, die diesem zweiten Verbrauchermodul mittels des Datenkabels 103 zur Verfügung gestellt werden, an das dritte Verbrauchermodul weiterzuleiten. Gleiches gilt für ein erstes und ein zweites differenzielles Datensignal. Dieses Prinzip lässt sich auf weitere Verbrauchermodule anwenden, so dass eine Vielzahl an Verbrauchermodulen über mehrere Datenkabel mit dem Eingabe-/Ausgabemodul 105 verbunden sind. Da das Eingabe-/Ausgabemodul 105 Gleichspannungen in ein solch aufgebautes Bussystem einspeisen kann, kann das Eingabe-/Ausgabemodul 105 auch als Einspeisemodul bezeichnet werden.

Das Eingabe-/Ausgabemodul 105 umfasst, wie in Fig. 1 gezeigt, eine Mikrocontrollereinheit 211. Der Stecker 183 umfasst, wie in Fig. 1 in Verbindung mit Fig. 2 gezeigt, eine weitere Mikrocontrollereinheit 193. Die Mikrocontrollereinheit 211 ist ausgebildet, mit der Mikrocontrollereinheit 193 zu kommunizieren. Analog ist die weitere Mikrocontrollereinheit 193 ausgebildet, mit der Mikrocontrollereinheit 211 zu kommunizieren. Beide Mikrocontrollereinheiten 193, 211 sind somit Kommunikationsteilnehmer.

Die Mikrocontrollereinheit 211 ist über vier Leitungen 213, 215, 217, 219 mit den elektrischen Kontakten 123, 125, 127, 129, wie nachfolgend erläutert, verbunden.

Die elektrische Leitung 213 verbindet die Mikrocontrollereinheit 211 mit dem Leitungsabschnitt 131, der die physikalische Schnittstelle 111 mit dem zweiten Übertrager 115 verbindet, wobei diese elektrische Leitung 131 mittelbar über den zweiten Übertrager 115 und den Kondensator 139 die physikalische Schnittstelle 111 mit dem vierten elektrischen Kontakt 129 verbindet. Somit ist also die Mikrocontrollereinheit 211 mittelbar mittels der Leitung 213 mit dem vierten elektrischen Kontakt 129 verbunden.

Die Mikrocontrollereinheit 211 ist ferner mit einer elektrischen Leitung 215 mittelbar mit dem dritten elektrischen Kontakt 127 wie folgt verbunden. Die elektrische Leitung 215 verbindet die Mikrocontrollereinheit 211 mit der elektrischen Leitung 131, die die physikalische Schnittstelle 111 mit dem zweiten Übertrager 115 verbindet, wobei diese elektrische Leitung 131 über den Kondensator 137 der zweiten kapazitiven Baugruppe 119 und über die Leitung 145 die physikalische Schnittstelle 111 mit dem dritten elektrischen Kontakt 127 verbindet.

Die Mikrocontrollereinheit 211 ist mittels der elektrischen Leitung 217 mit der elektrischen Leitung 131 verbunden, die die physikalische Schnittstelle 111 mit dem ersten Übertrager 113 verbindet, wobei diese elektrische Leitung dann die physikalische Schnittstelle 111 mittelbar über den ersten Übertrager 113, den Kondensator 135 der ersten kapazitiven Baugruppe 117 und über die elektrische Leitung 143 mit dem zweiten elektrischen Kontakt 125 verbindet.

Die Mikrocontrollereinheit 211 ist über die elektrische Leitung 219 mit der elektrischen Leitung 131 verbunden, die die physikalische Schnittstelle 111 mit dem ersten Übertrager 113 verbindet, wobei diese elektrische Leitung 131 die physikalische Schnittstelle 111 über den ersten Übertrager 113, den Kondensator 133 der ersten kapazitive Baugruppe 117 und über die elektrische Leitung 141 mit dem ersten elektrischen Kontakt 123 verbindet.

Somit ist also die Mikrocontrollereinheit 211 über den ersten Übertrager 113 über die erste kapazitive Baugruppe 117 mit dem ersten elektrischen Kontakt 123 und dem zweiten Kontakt 125 verbunden. Die Mikrocontrollereinheit 211 ist über den zweiten Übertrager 115 und die zweite kapazitive Baugruppe 119 mit dem dritten elektrischen Kontakt 127 und dem vierten elektrischen Kontakt 129 verbunden.

Somit kann zum Beispiel die Mikrocontrollereinheit 211 differenzielle Datensignale an die elektrischen Kontakte 123, 125, 127, 129 anlegen.

Die weitere Mikrocontrollereinheit 193 ist über eine elektrische Leitung 195 mit der Ader 181 des zweiten Adernpaares verbunden. Hierbei ist in dieser Leitung 195 ein Kondensator 203 geschaltet. Die weitere Mikrocontrollereinheit 193 ist über eine Leitung 197 mit der Ader 179 des zweiten Adernpaares verbunden. Hierbei ist ein Kondensator 205 in dieser Leitung 197 geschaltet. Die beiden Kondensatoren 203, 205 bilden eine dritte kapazitive Baugruppe. Somit ist die weitere Mikrocontrollereinheit 193 über eine dritte kapazitive Baugruppe mit dem zweiten Adernpaar verbunden. Ein differenzielles Datensignal, welches über dieses zweite Adernpaar übertragen wird, kann somit mittels der weiteren Mikrocontrollereinheit 193 empfangen werden. Umgekehrt kann die weitere Mikrocontrollereinheit 193 über die dritte kapazitive Baugruppe ein differenzielles Datensignal über das zweite Adernpaar an die Mikrocontrollereinheit 211 übertragen. Es ist somit über das zweite Adernpaar eine Kommunikation zwischen den beiden Mikrocontrollereinheiten 193, 211 ermöglicht.

Die weitere Mikrocontrollereinheit 193 ist mittels einer Leitung 199 mit der Ader 177 des ersten Adernpaares verbunden. Die Mikrocontrollereinheit 193 ist mit einer elektrischen Leitung 206 mit der Ader 175 des ersten Adernpaares verbunden.

In der Leitung 199 ist eine Induktivität 207 geschaltet, die zum Beispiel eine Spule ist. In der Leitung 206 ist eine Induktivität 209 geschaltet, die zum Beispiel eine Spule ist.

Die beiden Induktivitäten 207, 209 bilden eine dritte induktive Baugruppe. Somit ist die weitere Mikrocontrollereinheit 193 über die dritte induktive Baugruppe mit den Adern des ersten Adernpaares verbunden. Wenn also die erste Gleichspannungsversorgung 107 an den ersten elektrischen Kontakt 123 und den zweiten elektrischen Kontakt 125 eine elektrische Gleichspannung anlegt, so kann diese im gesteckten Zustand über die dritte induktive Baugruppe weiter an die weitere Mikrocontrollereinheit 193 übertragen werden. Das heißt also, dass eine Gleichspannungsversorgung der weiteren Mikrocontrollereinheit 193 über die beiden Adern 175, 177 des ersten Adernpaares ermöglicht ist.

Die Mikrocontrollereinheit 211 ist ausgebildet, nur dann die erste und zweite Gleichspannungsversorgung 107, 109 derart anzusteuern, dass diese eine jeweilige Gleichspannung an die entsprechenden elektrischen Kontakte 123, 125, 127, 129 anlegen, wenn die Mikrocontrollereinheit 211 mit der weiteren Mikrocontrollereinheit 193 kommunizieren konnte. Sofern also ein Datenkabel verwendet wird, welches eine solche weitere Mikrocontrollereinheit 193 nicht aufweist, so wird in diesem Fall keine Kommunikation stattfinden können. Dies ist dann für die Mikrocontrollereinheit 211 ein Zeichen dafür, dass ein Verbrauchermodul, allgemein ein Teil des Bussystems 101, welches mittels des Datenkabels an das Eingabe-/Ausgabemodul 105 angeschlossen wird respektive ist, nicht über eine so genannte "Power over Ethernet"-Funktionalität verfügt. Das heißt also, dass diesem weiteren Teilnehmer über das Datenkabel keine Gleichspannungen zur Verfügung gestellt werden dürfen. Entsprechend steuert dann die Mikrocontrollereinheit 211 die beiden Gleichspannungsversorgungen 107, 109 derart an, dass diese gerade keine Gleichspannung an die elektrischen Kontakte 123, 125, 127, 129 anlegen.

Dadurch kann in vorteilhafter Weise eine Beschädigung oder Zerstörung von Kommunikationskomponenten des weiteren Teilnehmers verhindert werden.

Fig. 2 zeigt eine isolierte Ansicht eines Ausschnitts aus dem Bussystem 101 der Fig. 1.

Detaillierter dargestellt ist die Buchse 121 mit den vier elektrischen Kontakten 123, 125, 127, 129. Der Übersicht halber sind auch hier die Kontaktkelche nicht eingezeichnet. Um die beiden Leitungen 141, 143 ist ein gestricheltes Oval mit dem Bezugszeichen 221 gezeichnet. Dies soll symbolisieren, dass die beiden Leitungen 141, 143 einen ersten Kommunikationskanal bilden. Dieser erste Kommunikationskanal dient also zur Übermittlung eines ersten differenziellen Datensignals. Im gesteckten Zustand wird dieser erste Kommunikationskanal über das erste Adernpaar umfassend die Adern 175, 177 des Datenkabels 103 fortgeführt.

Analog ist um die Leitungen 145, 147 ein gestrichelt dargestelltes Oval mit dem Bezugszeichen 223 gezeichnet, was symbolisieren soll, dass diese beiden Leitungen einen zweiten Kommunikationskanal bilden. Das heißt, dass über diesen zweiten Kommunikationskanal das zweite differenzielle Datensignal übertragen wird. Im gesteckten Zustand wird dieser zweite Kommunikationskanal mittels des zweiten Adernpaares umfassend die Adern 179, 181 fortgeführt.

Somit ist also in vorteilhafter Weise eine zweikanalige Kommunikation zwischen dem Eingabe-/Ausgabemodul 105 über das Datenkabel 103 mit einem hier nicht gezeigten weiteren Teilnehmer des Bussystems ermöglicht. Über das Datenkabel 103 können insbesondere erste und zweite differenzielle Datensignale sowie Gleichspannungen übertragen werden.

In einer nicht gezeigten Ausführungsform ist vorgesehen, dass die weitere Mikrocontrollereinheit 193 nur über die dritte induktive Baugruppe mit dem ersten Adernpaar, wie in Fig. 2 gezeigt, verbunden ist. In dieser nicht gezeigten Ausführungsform fehlt es daher an der dritten kapazitiven Baugruppe und an den entsprechenden Leitungen 195, 197. In diesem Fall wird anstelle der weiteren Mikrocontrollereinheit 193 ein elektronischer Datenspeicher, insbesondere ein PROM, verwendet. Für eine Kommunikation mit dem PROM reicht der erste Kommunikationskanal aus.

Ein Vorsehen einer weiteren Mikrocontrollereinheit 193 als Kommunikationsteilnehmer für die Mikrocontrollereinheit 211 weist insbesondere den Vorteil auf, dass komplette elektronische Datenblätter wie in einem normalen PROM gespeichert werden können. Andererseits kann eine solche weitere Mikrocontrollereinheit grundlegende Informationen loggen, also aufzeichnen oder dokumentieren. Ein ganz wesentlicher Vorteil ist aber die Fähigkeit der weiteren Mikrocontrollereinheit nach einer Kommunikation mit der Mikrocontrollereinheit 211 in einen Tiefschlafmodus zu fallen, so dass diese weitere Mikrocontrollereinheit eine Kommunikation zwischen der physikalischen Schnittstelle 111 des Eingabe-/Ausgabemoduls 105 und einer weiteren physikalischen Schnittstelle eines weiteren nicht gezeigten Teilnehmers nicht mehr stört.

Eine Ausgestaltung des Verfahrens umfasst zum Beispiel Folgendes:

In einem ersten Schritt werden die Teilnehmer des Bussystems eingeschaltet. Das heißt, dass das Eingabe-/Ausgabemodul 105 eingeschaltet wird. Das heißt, dass der weitere Teilnehmer, der über das Datenkabel 103 mit dem Eingabe-/Ausgabemodul 105 verbunden ist, eingeschaltet wird. Auf die beiden Leitungen 141, 143 des ersten Kommunikationskanals wird eine Messspannung aufgeschaltet. Diese Messspannung wird zum Beispiel mittels der ersten Gleichspannungsversorgung 107 aufgeschaltet. Hierfür steuert zum Beispiel die Mikrocontrollereinheit 211 die erste Gleichspannungsversorgung 107 entsprechend an.

In einem weiteren Schritt findet dann eine Kommunikation zwischen der Mikrocontrollereinheit 211 und der weiteren Mikrocontrollereinheit 193 statt. Das heißt, dass die Mikrocontrollereinheit 211 versucht, eine Kommunikationsverbindung mit der weiteren Mikrocontrollereinheit 193 aufzubauen. Sofern eine solche Kommunikation über den zweiten Kommunikationskanal ermöglicht ist, kann zum Beispiel die weitere Mikrocontrollereinheit 193 der Mikrocontrollereinheit 211 ein elektronisches Datenblatt zur Verfügung stellen. Somit können zum Beispiel die elektrischen und/oder mechanischen Eigenschaften, die Einschaltzyklen und/oder eine Temperatur des Datenkabels 103 als Information der Mikrocontrollereinheit 211 zur Verfügung gestellt werden.

In einem weiteren Schritt wird dann die weitere Mikrocontrollereinheit 193 abgeschaltet, insbesondere fällt diese in einen Tiefschlafmodus oder in einen Standby-Modus. Dies insbesondere dadurch, dass die Mikrocontrollereinheit 211 ein Standby-Signal über den zweiten Kommunikationskanal an die weitere Mikrocontrollereinheit 193 sendet.

Sofern die Kommunikation ergeben hat, dass es zulässig ist, eine Versorgungsspannung mittels der beiden Gleichspannungsversorgungen 107, 109 aufzuschalten oder anzuschalten, wird in einem weiteren Schritt die jeweilige Gleichspannung auf die entsprechenden elektrischen Kontakte 123, 125, 127, 129 aufgeschaltet.

Kann keine Kommunikation zwischen der Mikrocontrollereinheit 211 und der weiteren Mikrocontrollereinheit 193 aufgebaut werden, weil zum Beispiel die weitere Mikrocontrollereinheit 193 nicht im Datenkabel 103 vorhanden ist, so wird davon ausgegangen, dass der angeschlossene Teilnehmer nicht über eine so genannte "Power over Ethernet"-Funktionalität verfügt. Insofern werden keine Gleichspannungen aufgeschaltet.

Der Vorteil der weiteren Mikrocontrollereinheit 193 oder auch eines hier nicht gezeigten PROMS liegt auch insbesondere darin, dass die entsprechenden elektrischen Bauteile klein genug ausgebildet sind, um in den Stecker 183 integriert zu werden, insbesondere in diesen vergossen zu werden.

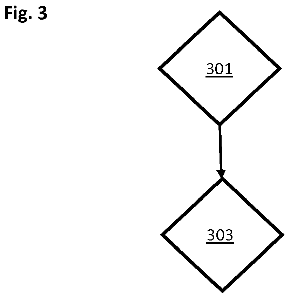

Fig. 3 zeigt ein Ablaufdiagramm eines Verfahrens zum Betreiben eines Eingabe-/Ausgabemoduls. Es kann sich zum Beispiel um das Eingabe-/Ausgabemodul 105 der Fig. 1 handeln.

Das Verfahren umfasst die folgenden Schritte:

- Prüfen 301 mittels der Mikrocontrollereinheit, ob eine Kommunikationsverbindung von der Mikrocontrollereinheit zu einem Kommunikationsteilnehmer eines in der Buchse gesteckten Datenkabels aufgebaut werden kann,
- Ansteuern 303 der Gleichspannungsversorgungen mittels der Mikrocontrollereinheit derart, dass die Gleichspannungsversorgungen nur dann an die entsprechenden elektrischen Kontakte der Kontaktkelche eine jeweilige Gleichspannung anlegen, wenn die Prüfung ergeben hat, dass eine Kommunikationsverbindung zu einem Teilnehmer des Datenkabels aufgebaut werden konnte.

In der Automatisierungstechnik haben sich verschiedene Feldbusprotokolle auf Ethernet mit einer Datenrate von 100 MBit/s etabliert. Da sich im Verbraucherbereich inzwischen Ethernet mit einer Datenrate von 1 GBit/s durchgesetzt hat, ist es sinnvoll, auch Feldbusprotokolle mit einer Datenrate von 1 GBit/s oder von 10 GBit/s zu übertragen.

Im Gegensatz zum Verbraucherbereich, in welchem wenige Teilnehmer große Datenmengen übertragen, müssen in der Feldbustechnik viele Teilnehmer mit wenigen Daten miteinander kommunizieren. Die Laufzeit eines Ethernettelegramms bei Standard-GBit-Technik zwischen zwei Teilnehmern beträgt etwa 1 $\mu$s, was der Übertragungszeit von 1000 Bit entspricht.

Aufgrund der größeren Anzahl der Teilnehmer in der Feldbustechnik, die in der Regel in Linie miteinander verbunden sind, spielt die Laufzeit eines Telegramms vom Sender zum Empfänger eine wesentlich größere Rolle.

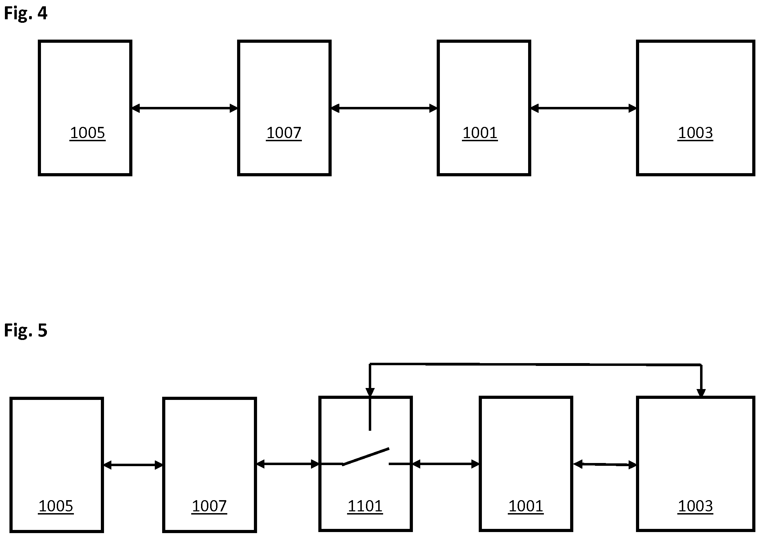

Eine Standard Ethernet-Anschaltung mit Gigabit-Physik (1000-BASE-T) zeigt schematisch in einer vereinfachten Ansicht das Blockdiagramm gemäß Figur 4.

Die Anschaltung umfasst eine physikalische Schnittstelle (auch PHY genannt) 1001 sowie eine Sender- und Empfangseinheit 1003. Als Kontaktstelle, zum Beispiel als ein Stecker, wird zum Beispiel ein RJ45-Stecker 1005 verwendet.

Als Schnittstelle zwischen der physikalischen Schnittstelle 1001 und der Sender- und Empfangseinheit 1003 wird üblicherweise das sogenannte "Reduced Gigabit Media Independent Interface (RGMII)" verwendet. Diese Schnittstelle wird im Folgenden einfach nur als RGMII bezeichnet. Beim RGMII werden vier Bits parallel mit jeweils 250 MBit/s übertragen. Die Schnittstelle zwischen der physikalischen Schnittstelle 1001 und einem Trafo 1007, der zwischen dem RJ45-Stecker 1005 und der physikalischen Schnittstelle 1001 geschaltet ist, bzw. die Schnittstelle auf dem Kabel ist ein Signal, bei dem nach dem PAM-5-Verfahren (PAM: Pulsamplitudenmodulation) über vier Doppeladern jeweils fünf Spannungspegel mit 125 MBaud (Baud ist die Einheit für 1 Symbol pro Sekunde) übertragen werden. Dadurch ergibt sich eine Symbolmenge von $5^4$=625 (5 hoch 4 = 625), die mit 125 MBaud übertragen wird (die 625 verschiedenen Symbole entsprechen rechnerisch rund 9,3 Bit, die mit 125 MBaud übertragen werden, somit ergibt sich eine Bruttodatenrate von 9,3 Bit/Symbol * 125 MBaud, also rund 1160 MBit/s). Da ein Byte nur 256 Symbole umfasst, werden die restlichen Symbole für eine Fehlerkorrektur verwendet, wodurch Übertragungsstrecken von bis zu 100 m zwischen zwei Teilnehmern erreicht werden (es ergibt sich dadurch die Nettodatenrate von 8 Bit/Symbol * 125 MBaud = 1000 MBit/s).

Im Vollduplexbetrieb werden die Doppeladern bidirektional verwendet, wobei der Empfänger sein Sendesignal abzieht, um das Empfangssignal zu erhalten.

Der größte Anteil der Durchlaufzeit entsteht durch die physikalische Schnittstelle 1001, die die vier Bits der RGMII-Schnittstelle in die Symbole des PAM-5-Verfahrens umsetzt.

Das PAM-5-Verfahren wird also verwendet, um Signale bzw. Daten zwischen dem RJ45-Stecker 1005 und dem Trafo 1007 respektive zwischen dem Trafo 1007 und der PHY 1001 zu übertragen.

In der Feldbustechnik ist es so, dass hier bei vielen Anwendungen eine kürzere Übertragungsstrecke zwischen zwei Teilnehmern, also zum Beispiel zwischen zwei Eingabe-/Ausgabemodulen, ausreicht, wodurch ein einfacheres Übertragungsverfahren verwendet werden kann, bei dem das zu übertragende Signal direkt von der Sender- und Empfangseinheit 1003 erzeugt wird, so dass keine physikalische Schnittstelle benötigt wird. Dadurch kann in vorteilhafter Weise eine Durchlaufzeit wesentlich verkürzt werden.

Um nicht Geräte, also insbesondere Eingabe-/Ausgabemodule, mit zwei unterschiedlichen Schnittstellen herstellen oder entwickeln zu müssen, ist erfindungsgemäß vorgesehen, dass eine physikalische Anschaltung einen Schalter umfasst, mittels welchem die physikalische Schnittstelle überbrückt werden kann. Dadurch kann in vorteilhafter Weise dieselbe physikalische Anschaltung sowohl für Standard-GBit-Physik als auch für eine einfachere Übertragungstechnik mit kürzerer Reichweite verwendet werden.

Eine solche zweite physikalische Anschaltung wird realisiert, um Teilnehmer, die ein gleiches Spannungspotential besitzen, über eine einfache Kontakt- bzw. Steckverbindung mit möglichst wenig Kontakten zu verbinden. Bei dieser Anschaltung werden die Signale bitweise nur über zwei Anschlüsse je Richtung übertragen werden. Dafür werden nur noch Sender und Empfänger benötigt, was einerseits die Hardwarekosten und andererseits die Durchlaufzeit reduziert.

Die umschaltbare physikalische Anschaltung ist zum Beispiel gemäß dem in der Figur 5 gezeigten Blockdiagramm realisiert.

Es ist vorgesehen, dass zwischen dem Trafo 1007 und der physikalischen Schnittstelle 1001 ein Schalter 1101 vorgesehen ist, der zum Beispiel als ein Hochfrequenzschalter ausgebildet ist. Ferner ist von diesem Schalter 1101 eine Leitung gebildet, die den Schalter 1101 mit der Sender- und Empfangseinheit 1003 verbindet. Der Schalter 1101 weist zwei Schaltzustände auf. In dem ersten Schaltzustand verbindet der Schalter 1101 den Trafo 1007 mit der physikalischen Schnittstelle 1001. Im zweiten Schaltzustand verbindet der Schalter 1101 den Trafo 1007 direkt mit der Sender- und Empfangseinheit 1003. Das heißt also, dass in der in Figur 5 gezeigten physikalischen Anschaltung ein Schalter 1101 integriert ist, mit dem die Leitungen zum Trafo 1007 entweder zur physikalischen Schnittstelle 1001 oder direkt zur Sender- und Empfangseinheit 1003 geschaltet werden kann. Mittels des Schalters 1101 kann somit in vorteilhafter Weise die PHY 1001 überbrückt werden.

Ein Datenübertragungsverfahren zwischen dem Schalter 1101 und der Sender- und Empfangseinheit 1003 kann zum Beispiel mittels der "Special Transfer Method (STM)" durchgeführt werden.

Bei einer Verbindung zwischen zwei Teilnehmern, also zum Beispiel zwischen zwei Eingabe-/Ausgabemodulen, gibt es die folgenden Möglichkeiten:

1. Ein Teilnehmer unterstützt nur Standard-GBit-Übertragung

2. Beide Teilnehmer unterstützen beide Übertragungsverfahren, die Leitungslänge zwischen beiden Teilnehmern ist aber zu groß für das einfache Übertragungsverfahren

3. Beide Teilnehmer unterstützen beide Übertragungsverfahren, die Leitungslänge zwischen beiden Teilnehmern ist klein genug für das einfache Übertragungsverfahren

Daher ist nach einer Ausführungsform vorgesehen, dass zunächst eine Standard-GBit-Verbindung zwischen beiden Teilnehmern aufgebaut wird. Anschließend ist dem jeweils anderen Teilnehmer mitzuteilen, dass eine umschaltbare physikalische Anschaltung vorhanden ist. Wenn beide Teilnehmer die umschaltbare physikalische Anschaltung besitzen, ist noch die Entfernung zwischen beiden Teilnehmern über eine Laufzeitmessung festzustellen. Zum Beispiel kann die Laufzeit ähnlich des IEEE 1588-Verfahrens ermittelt werden. Eine Ausführungsform, um eine Laufzeitmessung durchzuführen, zeigt beispielhaft das Blockdiagramm gemäß Figur 6.

Gezeigt sind zwei Teilnehmer 1201, 1203, die zum Beispiel als ein Eingabe-/Ausgabemodul ausgebildet sein können.

Zum Zeitpunkt t1_1 sendet der Teilnehmer 1201 ein erstes Telegramm 1205 an den Teilnehmer 1203. Das Telegramm 1205 kann zum Beispiel ein SimplePhysicReq-Telegramm sein. Hierbei speichert der Teilnehmer 1201 den Sendezeitpunkt t1_1 des Telegramms 1205.

Wenn der Teilnehmer 1203 das Telegramm 1205 empfängt, speichert der Teilnehmer 1203 den Empfangszeitpunkt t2_1 des Telegramms 1205. Der Teilnehmer 1203 schickt zum Zeitpunkt t3_1 ein weiteres Telegramm 1207, das zum Beispiel als ein SimplePhysicRes-Telegramm ausgebildet ist, zurück zum Teilnehmer 1201. Dieses Telegramm 1207 umfasst die Zeitpunkte t2_1 und t3_1.

Der Teilnehmer 1201 empfängt das Telegramm 1207 und speichert den Empfangszeitpunkt t4_1 des Telegramms 1207.

Analog wird das vorstehend beschriebene Verfahren beginnend mit dem Teilnehmer 1203 durchgeführt: Der Teilnehmer 1203 sendet analog zu einem Zeitpunkt t1_2 ein Telegramm 1205, zum Beispiel ein SimplePhysicReq-Telegramm, an den Teilnehmer 1201 und speichert den Sendezeitpunkt t1_2 des Telegramms 1205. Wenn der Teilnehmer 1201 das Telegramm 1205 empfängt, speichert der Teilnehmer 1201 den Empfangszeitpunkt t2 2 des Telegramms 1205. Der Teilnehmer 1201 schickt zum Zeitpunkt t3_2 ein weiteres Telegramm 1207, das zum Beispiel als ein SimplePhysicRes-Telegramm ausgebildet ist, zurück zum Teilnehmer 1203. Dieses Telegramm 1207 umfasst die Zeitpunkte t2_2 und t3_2. Der Teilnehmer 1203 empfängt das Telegramm 1207 und speichert den Empfangszeitpunkt t4 2 des Telegramms 1207.

Beide Teilnehmer 1201, 1203 verfügen nun jeweils über vier Zeiten t1_1 bis t4_1 respektive t1_2 bis t4_2.

Der Teilnehmer 1201 berechnet die Laufzeit wie folgt:

$$\texttt{Laufzeit = ((t4\_1 - t1\_1) - (t3\_1 - t2\_1))/2}$$

Der Teilnehmer 1203 berechnet die Laufzeit wie folgt:

$$\texttt{Laufzeit = ((t4\_2 - t1\_2) - (t3\_2 - t2\_2))/2}$$

Beide Teilnehmer 1201, 1203 ermitteln oder berechnen basierend auf ihrer jeweiligen ermittelten Laufzeit eine Entfernung zwischen sich und dem anderen Teilnehmer.

Ist die berechnete Entfernung unterhalb einer erlaubten Entfernung für das einfache Übertragen, ist nach einer Ausführungsform vorgesehen, dass sich die Teilnehmer 1201, 1203 hierüber verständigen. Beide Teilnehmer 1201, 1203 schalten insofern dann auf das einfache Übertragungsverfahren um. Denn beide Teilnehmer 1201, 1203 umfassen eine umschaltbare Anschaltung gemäß dem Blockdiagramm der Figur 5. Sofern die Entfernung oberhalb einer erlaubten Entfernung für das einfache Übertragen ist, so wird nicht umgeschaltet.

In einer Ausführungsform ist alternativ oder zusätzlich zu der Laufzeitmessung, wie sie im Zusammenhang mit der Fig. 6 beschrieben ist, vorgesehen, dass der Kommunikationsteilnehmer und/oder die Mikrocontrollereinheit die Information bereitstellen, ob eine Umschaltung notwendig ist oder nicht. Die bereitgestellte Information umfasst zum Beispiel die Information, um welchen Leitungstyp es sich handelt, also entweder eine STM-Leitung oder eine Standard-GBit-Leitung. Das heißt, dass nach einer Ausführungsform vorgesehen ist, dass die vorstehend beschriebene Information in der Mikrocontrollereinheit und/oder in dem Kommunikationsteilnehmer gespeichert sind. Abhängig von der bereitgestellten Information findet dann eine Umschaltung statt, wie nachstehend beispielhaft beschrieben.

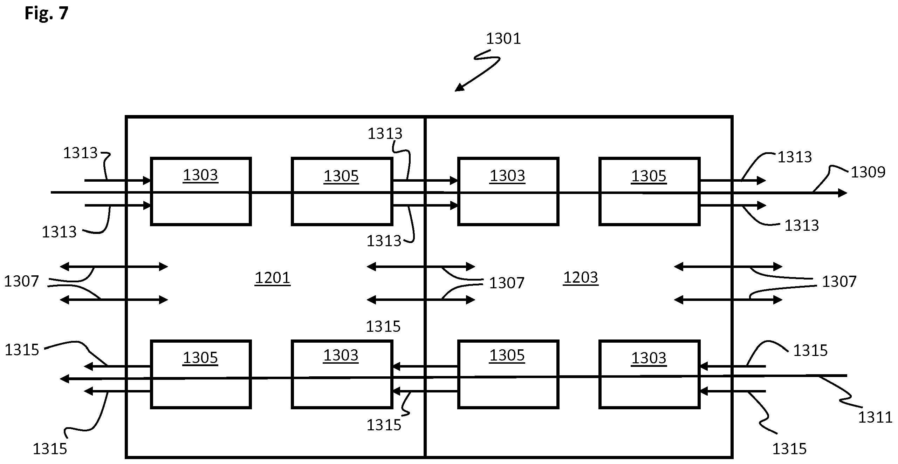

Figur 7 zeigt ein Blockdiagramm eines GBus 1301.

Der GBus ist eine steckbare physikalische Verbindung mit zwei Teilnehmern, die zum Beispiel als Eingabe-/Ausgabemodul ausgebildet sein können, mit sechs Leitungen, zum Beispiel sechs Adern, wovon je Übertragungsrichtung ein Leitungspaar (Adernpaar) und noch ein drittes Leitungspaar (drittes Adernpaar) für eine Spannungsübertragung verwendet wird.

Der GBus 1301 gemäß dem Blockdiagramm der Figur 7 ist wie folgt aufgebaut:
Zwei Teilnehmer 1201, 1203 sind über zwei Adernpaare umfassend zwei Adern 1315 respektive zwei Adern 1313 miteinander verbunden. Ein drittes Adernpaar umfassend zwei Adern 1307 ist symbolisch mittels Doppelpfeilen dargestellt und verbindet ebenfalls die beiden Teilnehmer 1201, 1203 und wird für eine Spannungsversorgung verwendet.

Eine erste Übertragungsrichtung vom Teilnehmer 1201 zum Teilnehmer 1203 ist mit einem Pfeil mit dem Bezugszeichen 1309 symbolisch dargestellt. Die dieser Übertragungsrichtung 1309 entgegengesetzte Übertragungsrichtung 1311 vom Teilnehmer 1203 zum Teilnehmer 1201 ist symbolisch mit einem Pfeil mit dem entsprechenden Bezugszeichen 1311 dargestellt. Die Adern für eine Datenübertragung entsprechend der Übertragungsrichtung 1309 sind symbolisch mit Pfeilen mit den Bezugszeichen 1313 dargestellt. Adern des Adernpaares zur Datenübertragung entsprechend der Übertragungsrichtung 1311 sind symbolisch mittels Pfeilen mit den Bezugszeichen 1315 dargestellt.

Je Übertragungsrichtung 1309, 1311 umfassen die Teilnehmer 1201, 1203 Sender 1305 und Empfänger 1303. Eine Signalübertragung erfolgt bitweise entsprechend des SerDes-Verfahrens (SerDes: Serialisierer/Deserialisierer), wobei 8 Bit Nutzdaten als 10 Bit Symbole codiert mit 1,25 GBaud übertragen werden.

Da beim GBus 1301 keine Kabel, Trafos oder physikalische Schnittstellen zwischen Sender 1305 und Empfänger 1303 mehr benötigt werden, ist diese Anschaltung besonders kostengünstig und weist eine minimale Durchlaufzeit auf.

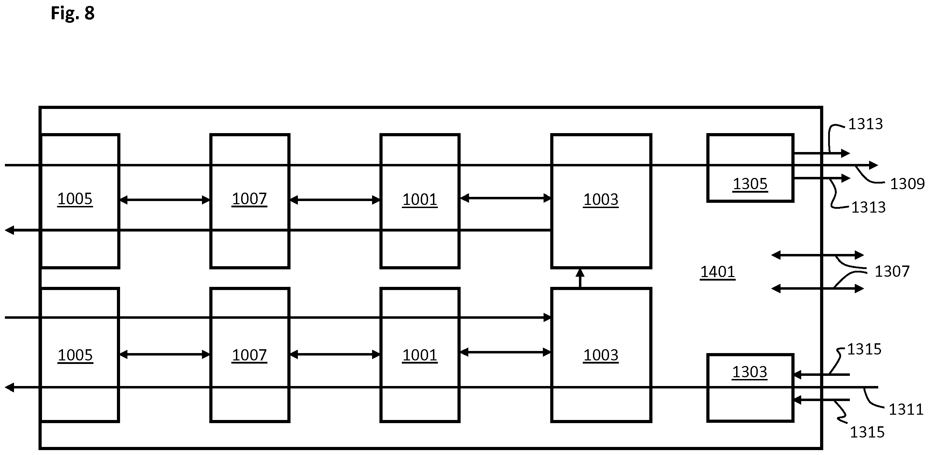

Figur 8 zeigt beispielhaft vereinfacht ein Blockdiagramm eines GBus-Wandlers 1401.

Um Teilnehmer mit einer GBus-Verbindung auch an Standard-GBit-Teilnehmer anschließen zu können, ist ein Umwandler 1401 gemäß Figur 8 vorgesehen, der entweder eine umschaltbare physikalische Verbindung oder die Standard-GBit-Verbindung auf GBus umsetzt. Gemäß Figur 8 umfasst der Wandler 1401 zwei Standard-GBit- und eine GBus-Verbindung. Die in Figur 8 dargestellten Pfeile sollen symbolisch eine Datenübertragungsrichtung symbolisieren respektive eine Spannungsübertragungsrichtung (bei den Doppelpfeilen 1307).

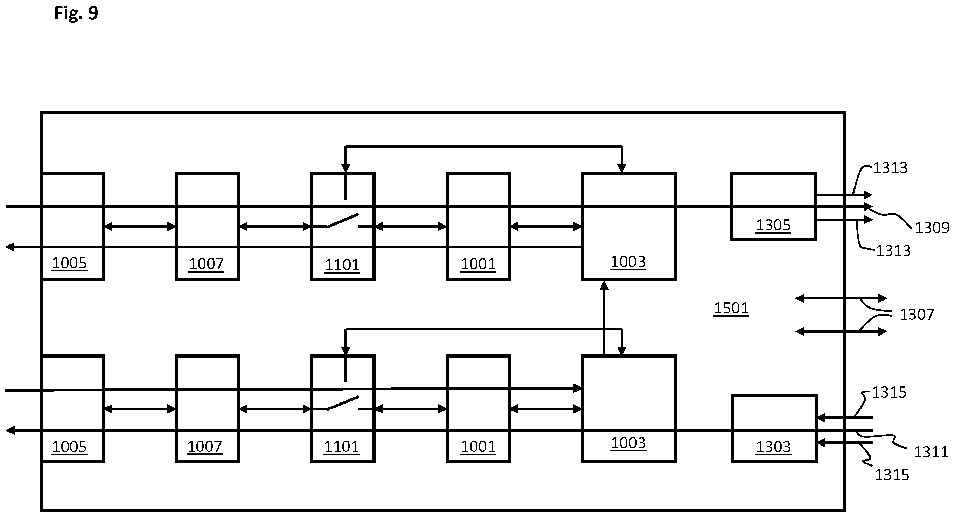

In Figur 9 ist ein umschaltbarer GBus-Wandler 1501 gezeigt, der zwei Schalter 1101 analog zu Figur 5 umfasst, um die physikalische Schnittstelle 1001 zu überbrücken. Die in Figur 9 dargestellten Pfeile sollen symbolisch eine Datenübertragungsrichtung symbolisieren respektive eine Spannungsübertragungsrichtung (bei den Doppelpfeilen 1307).

Somit ist vorgesehen, dass für kürzere Entfernungen andere physikalische Schnittstellen verwendet werden, um zum Beispiel EtherCAT mit 1 GBit/s, insbesondere 10 GBit/s, mit einer geringen Laufzeit übertragen zu können. Ferner ist nach einer Ausführungsform eine umschaltbare Verbindung (gebildet durch den Schalter 1101) vorgesehen, die entsprechend der verbundenen Teilnehmer zwischen einer schnelleren physikalischen Übertragung bei geringerer Reichweite und einer Standard-Ethernet-GBit (10 GBit/s oder mehr) umschalten kann.

Der im Zusammenhang mit den vorstehend gemachten Ausführungen beschriebene Schalter 1101 ist zum Beispiel beim Eingabe-/Ausgabemodul 105 der Fig. 1 vorgesehen, um dort entsprechend den Blockdiagrammen der Fig. 5 und 9 die physikalische Schnittstelle 111 zu überbrücken.

Das Kriterium für die Umschaltung basiert insbesondere auf der mittels des Kommunikationsteilnehmers und/oder mittels der Mikrocontrollereinheit bereitgestellten Information. Das Datenübertragungsverfahren (mit/ohne PHY) wird also zum Beispiel anhand des Datenkabeltyps, welches zum Beispiel im elektronischen Datenblatt gespeichert ist, eingestellt.

**Patentansprüche**

**1.**   Bussystem (101), umfassend:

- ein zwei Adernpaare (175, 177; 179, 181) aufweisendes Datenkabel (103),
- wobei das Datenkabel (103) einen ersten Teil (183) einer elektrischen Steckverbindung umfasst, wobei der erste Teil vier erste elektrische Kontaktelemente (185, 187, 189, 191) umfasst, wobei
- die vier ersten elektrischen Kontaktelemente mit jeweils einer der Adern (175, 177, 179, 181) der zwei Adernpaare elektrisch verbunden sind,
- ein Eingabe-/Ausgabemodul (105),
- wobei das Eingabe-/Ausgabemodul (105) eine erste Gleichspannungsversorgung (107), eine zweite Gleichspannungsversorgung (109), eine physikalische Schnittstelle (111), einen ersten Übertrager (113), einen zweiten Übertrager (115), eine erste induktive Baugruppe (149), eine zweite induktive Baugruppe (151), eine erste kapazitive Baugruppe (117), eine zweite kapazitive Baugruppe (119) und einen zum ersten Teil der elektrischen Steckverbindung komplementären zweiten Teil aufweist, wobei der zweite Teil (121) vier zweite elektrische Kontaktelemente (123, 125, 127, 129) umfasst,
- wobei die vier zweiten elektrischen Kontaktelemente jeweils einen elektrischen Kontakt umfassen,
- wobei die erste Gleichspannungsversorgung (107) über die erste induktive Baugruppe (149) mit einem jeweiligen elektrischen Kontakt von zwei der vier zweiten elektrischen Kontaktelemente verbunden ist,
- wobei die zweite Gleichspannungsversorgung (109) über die zweite induktive Baugruppe (151) mit einem jeweiligen elektrischen Kontakt von zwei anderen der vier zweiten elektrischen Kontaktelemente verbunden ist,
- wobei die physikalische Schnittstelle (111) über den ersten Übertrager (113) und über die erste kapazitive Baugruppe (117) mit den jeweiligen elektrischen Kontakten von den zwei der vier zweiten elektrischen Kontaktelemente verbunden ist, um ein erstes differenzielles Datensignal an die zwei elektrischen Kontakte der zwei der vier zweiten elektrischen Kontaktelemente anzulegen,
- wobei die physikalische Schnittstelle (111) über den zweiten Übertrager (115) und über die zweite kapazitive Baugruppe (119) mit den jeweiligen elektrischen Kontakten von den zwei anderen der vier zweiten elektrischen Kontaktelemente verbunden ist, um ein zweites differenzielles Datensignal an die zwei elektrischen Kontakte der zwei anderen der vier zweiten elektrischen Kontaktelemente anzulegen,

**dadurch gekennzeichnet, dass**

- das Datenkabel (103) einen Kommunikationsteilnehmer (193) aufweist,
- wobei das Eingabe-/Ausgabemodul (105) eine Mikrocontrollereinheit (211) umfasst,
- wobei die Mikrocontrollereinheit (211) ausgebildet ist, mit dem Kommunikationsteilnehmer (193) des Datenkabels (103) zu kommunizieren,
- wobei die Mikrocontrollereinheit (211) ausgebildet ist, nur dann die erste und zweite Gleichspannungsversorgung (107, 109) derart anzusteuern, dass diese eine jeweilige Gleichspannung an die entsprechenden elektrischen Kontakte der vier zweiten elektrischen Kontaktelemente anlegen, wenn die Mikrocontrollereinheit (211) mit dem Kommunikationsteilnehmer (193) des Datenkabels (103) kommunizieren konnte, so dass bei fehlender Kommunikation und/ oder fehlendem Kommunikationsteilnehmer (193) im Datenkabel (103) keine jeweilige Gleichspannung angelegt wird.

**2.**   Eingabe-/Ausgabemodul (105) für ein Bussystem (101), umfassend:

- eine erste Gleichspannungsversorgung (107), eine zweite Gleichspannungsversorgung (109), eine physikalische Schnittstelle (111), einen ersten Übertrager (113), einen zweiten Übertrager (115), eine erste induktive Baugruppe (149), eine zweite induktive Baugruppe (151), eine erste kapazitive Baugruppe (117), eine zweite kapazitive Baugruppe (119) und einen Teil (121) einer elektrischen Steckverbindung, wobei der eine Teil vier elektrische Kontaktelemente (123, 125, 127, 129) umfasst,

- wobei die vier elektrischen Kontaktelemente jeweils einen elektrischen Kontakt umfassen,

- wobei die erste Gleichspannungsversorgung (107) über die erste induktive Baugruppe (149) mit einem jeweiligen elektrischen Kontakt von zwei der vier elektrischen Kontaktelemente verbunden ist,

- wobei die zweite Gleichspannungsversorgung (109) über die zweite induktive Baugruppe (151) mit einem jeweiligen elektrischen Kontakt von zwei anderen der vier elektrischen Kontaktelemente verbunden ist,

- wobei die physikalische Schnittstelle (111) über den ersten Übertrager (113) und über die erste kapazitive Baugruppe (117) mit den jeweiligen elektrischen Kontakten von den zwei der vier elektrischen Kontaktelemente verbunden ist, um ein erstes differenzielles Datensignal an die zwei elektrischen Kontakte der zwei der vier elektrischen Kontaktelemente anzulegen,

- wobei die physikalische Schnittstelle (111) über den zweiten Übertrager (115) und über die zweite kapazitive Baugruppe (119) mit den jeweiligen elektrischen Kontakten von den zwei anderen der vier elektrischen Kontaktelemente verbunden ist, um ein zweites differenzielles Datensignal an die zwei elektrischen Kontakte der zwei anderen der vier elektrischen Kontaktelemente anzulegen,

**dadurch gekennzeichnet, dass**

- das Eingabe-/Ausgabemodul (105) eine Mikrocontrollereinheit (211) umfasst,

- wobei die Mikrocontrollereinheit (211) ausgebildet ist, mit einem Kommunikationsteilnehmer (193) eines Datenkabels (103) zu kommunizieren,

- wobei die Mikrocontrollereinheit (211) ausgebildet ist, nur dann die erste und zweite Gleichspannungsversorgung (107, 109) derart anzusteuern, dass diese eine jeweilige Gleichspannung an die entsprechenden elektrischen Kontakte der vier elektrischen Kontaktelemente anlegen, wenn die Mikrocontrollereinheit (211) mit dem Kommunikationsteilnehmer (193) des Datenkabels (103) kommunizieren konnte, so dass bei fehlender Kommunikation und/ oder fehlendem Kommunikationsteilnehmer (193) im Datenkabel (103) keine jeweilige Gleichspannung angelegt wird.

3. Eingabe-/Ausgabemodul (105) nach Anspruch 2, wobei der eine Teil der elektrischen Steckverbindung als ein Stecker umfassend die vier elektrischen Kontaktelemente ausgebildet ist, wobei die vier elektrischen Kontaktelemente jeweils als elektrischer Kontaktstift ausgebildet sind, oder wobei der eine Teil der elektrischen Steckverbindung als eine die vier elektrischen Kontaktelemente aufweisende Buchse ausgebildet ist, wobei die vier elektrischen Kontaktelemente jeweils als Kontaktkelch ausgebildet sind.

4. Eingabe-/Ausgabemodul (105) nach Anspruch 2 oder3, wobei die Mikrocontrollereinheit (211) über den ersten Übertrager (113) und die erste kapazitive Baugruppe (117) mit den jeweiligen elektrischen Kontakten der zwei der vier elektrischen Kontaktelemente und/oder über den zweiten Übertrager (115) und die zweite kapazitive Baugruppe (119) mit den jeweiligen elektrischen Kontakten der anderen zwei der vier elektrischen Kontaktelemente verbunden ist, um an die entsprechenden elektrischen Kontakte Datensignale für eine Kommunikation mit dem Kommunikationsteilnehmer (193) anlegen zu können.

5. Eingabe-/Ausgabemodul (105) nach Anspruch 4, wobei die Mikrocontrollereinheit (211) ausgebildet ist, eine Versorgungsspannung für den Kommunikationsteilnehmer (193) an elektrische Kontakte der elektrischen Kontaktelemente anzulegen, wobei die Versorgungsspannung kleiner ist als die mittels der ersten und zweiten Gleichspannungsversorgung (107, 109) an die elektrischen Kontakte der elektrischen Kontaktelemente anlegbaren Gleichspannungen.

6. Eingabe-/Ausgabemodul (105) nach einem der Ansprüche 2 bis 5, wobei die Mikrocontrollereinheit (211) ausgebildet ist, ein Standby-Signal an den Kommunikationsteilnehmer (193) zu senden.

7. Eingabe-/Ausgabemodul (105) nach einem der Ansprüche 2 bis 6, wobei die Mikrocontrollereinheit (211) ausgebildet ist, ein elektronisches Datenblatt aus einem Datenspeicher des Kommunikationsteilnehmers (193) auszulesen und einen Betrieb des Eingabe-/Ausgabemoduls (105) basierend auf dem ausgelesenen Datenblatt zu steuern.

8. Datenkabel (103) für ein Bussystem (101), umfassend:

- zwei Adernpaare (175, 177; 179, 181),
- einen Teil (183) einer elektrischen Steckverbindung, wobei der eine Teil vier elektrische Kontaktelemente (185, 187, 189, 191) umfasst,
- wobei die vier elektrischen Kontaktelemente mit jeweils einer der Adern (175, 177; 179, 181) der zwei Adernpaare elektrisch verbunden sind,

**dadurch gekennzeichnet, dass**

- das Datenkabel (103) einen Kommunikationsteilnehmer (193) für eine Kommunikation mit einer Mikrocontrollereinheit (211) eines Eingabe-/Ausgabemoduls (105) gemäß einem der Ansprüche 2 bis 7 aufweist.

9. Datenkabel (103) nach Anspruch 8, wobei der eine Teil der elektrischen Steckverbindung als ein Stecker umfassend die vier elektrischen Kontaktelemente ausgebildet ist, wobei die vier elektrischen Kontaktelemente jeweils als elektrischer Kontaktstift ausgebildet sind, oder wobei der eine Teil der elektrischen Steckverbindung als eine die vier elektrischen Kontaktelemente aufweisende Buchse ausgebildet ist, wobei die vier elektrischen Kontaktelemente jeweils als Kontaktkelch ausgebildet sind.

10. Datenkabel (103) nach Anspruch 8 oder 9, wobei der Kommunikationsteilnehmer (193) mit zumindest einer der vier Adern der zwei Adernpaare verbunden ist, um im gesteckten Zustand die Datensignale der Mikrocontrollereinheit (211) über die zumindest eine Ader empfangen und/ oder Datensignale an die Mikrocontrollereinheit (211) über die zumindest eine Ader senden zu können.

11. Datenkabel (103) nach Anspruch 10, wobei der Kommunikationsteilnehmer (193) über eine dritte kapazitive Baugruppe (203; 205) mit dem einen der zwei Adernpaare und über eine dritte induktive Baugruppe (207; 209) mit dem anderen der zwei Adernpaare verbunden ist.

12. Datenkabel (103) nach einem der Ansprüche 8 bis 11, wobei der Kommunikationsteilnehmer (193) ausgebildet ist, ansprechend auf ein Standby-Signal in einen Standby-Zustand zu wechseln.

13. Datenkabel (103) nach einem der Ansprüche 8 bis 12, wobei der Kommunikationsteilnehmer (193) als eine weitere Mikrocontrollereinheit (193) oder als ein programmierbarer Nur-Lese-Speicher ausgebildet ist.

14. Verfahren zum Betreiben eines Eingabe-/Ausgabemoduls (105) nach einem der Ansprüche 2 bis 7, umfassend die folgenden Schritte:

- Prüfen mittels der Mikrocontrollereinheit (211), ob eine Kommunikationsverbindung von der Mikrocontrollereinheit (211) zu einem Kommunikationsteilnehmer (193) eines in den einen Teil der elektrischen Steckverbindung gesteckten Datenkabels (103) aufgebaut werden kann,
- Ansteuern der Gleichspannungsversorgungen mittels der Mikrocontrollereinheit (211) derart, dass die Gleichspannungsversorgungen nur dann an die entsprechenden elektrischen Kontakte der elektrischen Kontaktelemente eine jeweilige Gleichspannung anlegen, wenn die Prüfung ergeben hat, dass eine Kommunikationsverbindung zu einem Teilnehmer des Datenkabels (103) aufgebaut werden konnte.

15. Computerprogramm, umfassend Programmcode zur Durchführung des Verfahrens nach Anspruch 14, wenn das Computerprogramm auf einem Computer ausgeführt wird.

**Claims**

1. Bus system (101), comprising:

- a data cable (103) having two wire pairs (175, 177; 179, 181),
- wherein the data cable (103) comprises a first portion (183) of an electrical plug connection, the first portion comprising four first electrical contact elements (185, 187, 189, 191), wherein
- the four first electrical contact elements are each electrically connected to one of the wires (175, 177, 179, 181) of the two wire pairs,
- an input/output module (105),
- wherein the input/output module (105) has a first DC voltage supply (107), a second DC voltage supply (109), a physical interface (111), a first transformer (113), a second transformer (115), a first inductive assembly (149), a second inductive assembly (151), a first capacitive assembly (117), a second capacitive assembly (119) and a second portion that is complementary to the first portion of the electrical plug connection, the second portion (121) comprising four second electrical contact elements (123, 125, 127, 129),

- wherein the four second electrical contact elements each comprise an electrical contact,
- wherein the first DC voltage supply (107) is connected to a respective electrical contact of two of the four second electrical contact elements via the first inductive assembly (149),
- wherein the second DC voltage supply (109) is connected to a respective electrical contact of two others of the four second electrical contact elements via the second inductive assembly (151),
- wherein the physical interface (111) is connected to the respective electrical contacts of the two of the four second electrical contact elements via the first transformer (113) and via the first capacitive assembly (117) in order to apply a first differential data signal to the two electrical contacts of the two of the four second electrical contact elements,
- wherein the physical interface (111) is connected to the respective electrical contacts of the two others of the four second electrical contact elements via the second transformer (115) and via the second capacitive assembly (119) in order to apply a second differential data signal to the two electrical contacts of the two others of the four second electrical contact elements,

**characterized in that**

- the data cable (103) has a communication subscriber (193),
- wherein the input/output module (105) comprises a microcontroller unit (211),
- wherein the microcontroller unit (211) is configured to communicate with the communication subscriber (193) of the data cable (103),
- wherein the microcontroller unit (211) is configured to actuate the first and second DC voltage supplies (107, 109) such that they apply a respective DC voltage to the applicable electrical contacts of the four second electrical contact elements only if the microcontroller unit (211) has been able to communicate with the communication subscriber (193) of the data cable (103), so that a respective DC voltage is not applied in the absence of the communication and/or in the absence of a communication subscriber (193) in the data cable (103).

2. Input/output module (105) for a bus system (101), comprising:

- a first DC voltage supply (107), a second DC voltage supply (109), a physical interface (111), a first transformer (113), a second transformer (115), a first inductive assembly (149), a second inductive assembly (151), a first capacitive assembly (117), a second capacitive assembly (119) and a portion (121) of an electrical plug connection, the one portion comprising four electrical contact elements (123, 125, 127, 129),
- wherein the four electrical contact elements each comprise an electrical contact,
- wherein the first DC voltage supply (107) is connected to a respective electrical contact of two of the four electrical contact elements via the first inductive assembly (149),
- wherein the second DC voltage supply (109) is connected to a respective electrical contact of two others of the four electrical contact elements via the second inductive assembly (151),
- wherein the physical interface (111) is connected to the respective electrical contacts of the two of the four electrical contact elements via the first transformer (113) and via the first capacitive assembly (117) in order to apply a first differential data signal to the two electrical contacts of the two of the four electrical contact elements,
- wherein the physical interface (111) is connected to the respective electrical contacts of the two others of the four electrical contact elements via the second transformer (115) and via the second capacitive assembly (119) in order to apply a second differential data signal to the two electrical contacts of the two others of the four electrical contact elements, **characterized in that**
- the input/output module (105) comprises a microcontroller unit (211),
- wherein the microcontroller unit (211) is configured to communicate with a communication subscriber (193) of a data cable (103),
- wherein the microcontroller unit (211) is configured to actuate the first and second DC voltage supplies (107, 109) such that they apply a respective DC voltage to the applicable electrical contacts of the four electrical contact elements only if the microcontroller unit (211) has been able to communicate with the communication subscriber (193) of the data cable (103), so that a respective DC voltage is not applied in the absence of communication and/or in the absence of a communication subscriber (193) in the data cable (103).

3. Input/output module (105) according to Claim 2, wherein the one portion of the electrical plug connection is configured as a plug comprising the four electrical contact elements, the four electrical contact elements each being configured as an electrical contact pin, or wherein the one portion of the electrical plug connection is configured as a socket having the four electrical contact elements, the four electrical contact elements each being configured as a contact cup.

4. Input/output module (105) according to Claim 2 or 3, wherein the microcontroller unit (211) is connected to the respective electrical contacts of the two of the four electrical contact elements via the first transformer (113) and the first capacitive assembly (117) and/or to the respective electrical contacts of the other two of the four electrical contact elements via the second transformer (115) and the second capacitive assembly (119) in order to be able to apply data signals for a communication with the communication subscriber (193) to the applicable electrical contacts.

5. Input/output module (105) according to Claim 4, wherein the microcontroller unit (211) is configured to apply a supply voltage for the communication subscriber (193) to electrical contacts of the electrical contact elements, the supply voltage being lower than the DC voltages that can be applied to the electrical contacts of the electrical contact elements by means of the first and second DC voltage supplies (107, 109).

6. Input/output module (105) according to any one of Claims 2 to 5, wherein the microcontroller unit (211) is configured to send a standby signal to the communication subscriber (193).

7. Input/output module (105) according to any one of Claims 2 to 6, wherein the microcontroller unit (211) is configured to read an electronic datasheet from a data memory of the communication subscriber (193) and to control operation of the input/output module (105) based on the read datasheet.

8. Data cable (103) for a bus system (101), comprising:

   - two wire pairs (175, 177; 179, 181),
   - a portion (183) of an electrical plug connection, the one portion comprising four electrical contact elements (185, 187, 189, 191),
   - wherein the four electrical contact elements are each electrically connected to one of the wires (175, 177; 179, 181) of the two wire pairs,

   **characterized in that**

   - the data cable (103) has a communication subscriber (193) for a communication with a microcontroller unit (211) of an input/output module (105) according to any one of Claims 2 to 7.

9. Data cable (103) according to Claim 8, wherein the one portion of the electrical plug connection is configured as a plug comprising the four electrical contact elements, the four electrical contact elements each being configured as an electrical contact pin, or wherein the one portion of the electrical plug connection is configured as a socket having the four electrical contact elements, the four electrical contact elements each being configured as a contact cup.

10. Data cable (103) according to Claim 8 or 9, wherein the communication subscriber (193) is connected to at least one of the four wires of the two wire pairs in order to be able, in the plugged-in state, to receive the data signals of the microcontroller unit (211) via the at least one wire and/or to send data signals to the microcontroller unit (211) via the at least one wire.

11. Data cable (103) according to Claim 10, wherein the communication subscriber (193) is connected to the one of the two wire pairs via a third capacitive assembly (203; 205) and to the other of the two wire pairs via a third inductive assembly (207; 209) .

12. Data cable (103) according to any one of Claims 8 to 11, wherein the communication subscriber (193) is configured to change to a standby state in response to a standby signal.

13. Data cable (103) according to any one of Claims 8 to 12, wherein the communication subscriber (193) is configured as a further microcontroller unit (193) or as a programmable read-only memory.

14. Method for operating an input/output module (105) according to any one of Claims 2 to 7, comprising the following steps:

- using the microcontroller unit (211) to check whether a communication connection can be set up from the microcontroller unit (211) to a communication subscriber (193) of a data cable (103) plugged into the one portion of the electrical plug connection,
- using the microcontroller unit (211) to actuate the DC voltage supplies such that the DC voltage supplies apply a respective DC voltage to the applicable electrical contacts of the electrical contact elements only if the check has revealed that a communication connection has been able to be set up to a subscriber of the data cable (103).

**15.** Computer program, comprising program code for performing the method according to Claim 14 when the computer program is executed on a computer.

**Revendications**

**1.** Système de bus (101), comprenant :

- un câble de données (103) qui possède deux paires de conducteurs (175, 177 ; 179, 181),
- le câble de données (103) comprenant une première partie (183) d'une connexion électrique par enfichage, la première partie comprenant quatre premiers éléments de contact électriques (185, 187, 189, 191),
- les quatre premiers éléments de contact électriques étant reliés électriquement respectivement à l'un des conducteurs (175, 177, 179, 181) des deux paires de conducteurs,
- un module d'entrée/sortie (105),
- le module d'entrée/sortie (105) possédant une première alimentation en tension continue (107), une deuxième alimentation en tension continue (109), une interface physique (111), un premier transmetteur (113), un deuxième transmetteur (115), un premier sous-ensemble inductif (149), un deuxième sous-ensemble inductif (151), un premier sous-ensemble capacitif (117), un deuxième sous-ensemble capacitif (119) et une deuxième partie complémentaire de la première partie de la connexion électrique par enfichage, la deuxième partie (121) comprenant quatre deuxièmes éléments de contact électriques (123, 125, 127, 129),
- les quatre deuxièmes éléments de contact électriques comprenant chacun respectivement un contact électrique,
- la première alimentation en tension continue (107) étant reliée par le biais du premier sous-ensemble inductif (149) à un contact électrique respectif de deux des quatre deuxièmes éléments de contact électriques,
- la deuxième alimentation en tension continue (109) étant reliée par le biais du deuxième sous-ensemble inductif (151) à un contact électrique respectif de deux autres des quatre deuxièmes éléments de contact électriques,
- l'interface physique (111) étant reliée par le biais du premier transmetteur (113) et par le biais du premier sous-ensemble capacitif (117) aux contacts électriques respectifs des deux des quatre deuxièmes éléments de contact électriques afin d'appliquer un premier signal de données différentiel aux deux contacts électriques des deux des quatre deuxièmes éléments de contact électriques,
- l'interface physique (111) étant reliée par le biais du deuxième transmetteur (115) et par le biais du deuxième sous-ensemble capacitif (119) aux contacts électriques respectifs des deux autres des quatre deuxièmes éléments de contact électriques afin d'appliquer un deuxième signal de données différentiel aux deux contacts électriques des deux autres des quatre deuxièmes éléments de contact électriques,

**caractérisé en ce que**

- le câble de données (103) possède un correspondant de communication (193),
- le module d'entrée/sortie (105) possédant une unité à microcontrôleur (211),
- l'unité à microcontrôleur (211) étant configurée pour communiquer avec le correspondant de communication (193) du câble de données (103),
- l'unité à microcontrôleur (211) étant configurée pour ne commander la première et la deuxième alimentation en tension continue (107, 109) de telle sorte que celles-ci appliquent une tension continue respective aux contacts électriques correspondants des quatre deuxièmes éléments de contact électriques que lorsque l'unité à microcontrôleur (211) pourrait être en mesure de communiquer avec le correspondant de communication (193) du câble de données (103), de sorte qu'aucune tension continue respective n'est appliquée en cas d'absence de communication et/ou d'absence de correspondant de communication (193) dans le câble de données (103).

**2.** Module d'entrée/sortie (105) pour un système de bus (101), comprenant :

- une première alimentation en tension continue (107), une deuxième alimentation en tension continue (109), une interface physique (111), un premier transmetteur (113), un deuxième transmetteur (115), un premier sous-ensemble inductif (149), un deuxième sous-ensemble inductif (151), un premier sous-ensemble capacitif (117), un deuxième sous-ensemble capacitif (119) et une partie (121) d'une connexion électrique par enfichage, ladite partie comprenant quatre éléments de contact électriques (123, 125, 127, 129),

- les quatre éléments de contact électriques comprenant chacun un contact électrique,

- la première alimentation en tension continue (107) étant reliée par le biais du premier sous-ensemble inductif (149) à un contact électrique respectif de deux des quatre deuxièmes éléments de contact électriques,

- la deuxième alimentation en tension continue (109) étant reliée par le biais du deuxième sous-ensemble inductif (151) à un contact électrique respectif de deux autres des quatre deuxièmes éléments de contact électriques,

- l'interface physique (111) étant reliée par le biais du premier transmetteur (113) et par le biais du premier sous-ensemble capacitif (117) aux contacts électriques respectifs des deux des quatre éléments de contact électriques afin d'appliquer un premier signal de données différentiel aux deux contacts électriques des deux des quatre éléments de contact électriques,

- l'interface physique (111) étant reliée par le biais du deuxième transmetteur (115) et par le biais du deuxième sous-ensemble capacitif (119) aux contacts électriques respectifs des deux autres des quatre éléments de contact électriques afin d'appliquer un deuxième signal de données différentiel aux deux contacts électriques des deux autres des quatre éléments de contact électriques,

**caractérisé en ce que**

- le module d'entrée/sortie (105) comprend une unité à microcontrôleur (211),

- l'unité à microcontrôleur (211) étant configurée pour communiquer avec un correspondant de communication (193) d'un câble de données (103),

- l'unité à microcontrôleur (211) étant configurée pour ne commander la première et la deuxième alimentation en tension continue (107, 109) de telle sorte que celles-ci appliquent une tension continue respective aux contacts électriques correspondants des quatre éléments de contact électriques que lorsque l'unité à microcontrôleur (211) pourrait être en mesure de communiquer avec le correspondant de communication (193) du câble de données (103), de sorte qu'aucune tension continue respective n'est appliquée en cas d'absence de communication et/ou d'absence de correspondant de communication (193) dans le câble de données (103).

3. Module d'entrée/sortie (105) selon la revendication 2, ladite partie de la connexion électrique par enfichage étant réalisée sous la forme d'une fiche comprenant les quatre éléments de contact électriques, les quatre éléments de contact électriques étant respectivement réalisés sous la forme de broches de contact électriques, ou ladite partie de la connexion électrique par enfichage étant réalisée sous la forme d'une douille possédant les quatre éléments de contact électriques, les quatre éléments de contact électriques étant respectivement réalisés sous la forme de tulipes de contact.

4. Module d'entrée/sortie (105) selon la revendication 2 ou 3, l'unité à microcontrôleur (211) étant reliée par le biais du premier transmetteur (113) et du premier sous-ensemble capacitif (117) aux contacts électriques respectifs des deux des quatre éléments de contact électriques et/ou par le biais du deuxième transmetteur (115) et du deuxième sous-ensemble capacitif (119) aux contacts électriques respectifs des deux autres des quatre éléments de contact électriques afin de pouvoir appliquer aux contacts électriques correspondants des signaux de données pour une communication avec le correspondant de communication (193) .

5. Module d'entrée/sortie (105) selon la revendication 4, l'unité à microcontrôleur (211) étant configurée pour appliquer une tension d'alimentation pour le correspondant de communication (193) aux contacts électriques des éléments de contact électriques, la tension d'alimentation étant inférieure aux tensions continues qui peuvent être appliquées aux contacts électriques des éléments de contact électriques au moyen de la première et de la deuxième alimentation en tension continue (107, 109).

6. Module d'entrée/sortie (105) selon l'une des revendications 2 à 5, l'unité à microcontrôleur (211) étant configurée pour envoyer un signal de veille au correspondant de communication (193).

7. Module d'entrée/sortie (105) selon l'une des revendications 2 à 6, l'unité à microcontrôleur (211) étant configurée pour charger une fiche technique électronique depuis une mémoire de données du correspondant de communication (193) et commander un fonctionnement du module d'entrée/sortie (105) en se basant sur la fiche technique chargée.

**8.** Câble de données (103) pour un système de bus (101), comprenant :

- deux paires de conducteurs (175, 177 ; 179, 181),
- une partie (183) d'une connexion électrique par enfichage, ladite partie comprenant quatre éléments de contact électriques (185, 187, 189, 191),
- les quatre éléments de contact électriques étant reliés électriquement respectivement à l'un des conducteurs (175, 177 ; 179, 181) des deux paires de conducteurs,

**caractérisé en ce que**

- le câble de données (103) possède un correspondant de communication (193) pour une communication avec une unité à microcontrôleur (211) d'un module d'entrée/sortie (105) selon l'une des revendications 2 à 7.

**9.** Câble de données (103) selon la revendication 8, ladite partie de la connexion électrique par enfichage étant réalisée sous la forme d'une fiche comprenant les quatre éléments de contact électriques, les quatre éléments de contact électriques étant respectivement réalisés sous la forme de broches de contact électriques, ou ladite partie de la connexion électrique par enfichage étant réalisée sous la forme d'une douille possédant les quatre éléments de contact électriques, les quatre éléments de contact électriques étant respectivement réalisés sous la forme de tulipes de contact.

**10.** Câble de données (103) selon la revendication 8 ou 9, le correspondant de communication (193) étant relié à au moins l'un des quatre conducteurs des deux paires de conducteurs afin de pouvoir, à l'état enfiché, recevoir les signaux de données de l'unité à microcontrôleur (211) par le biais de l'au moins un conducteur et/ou émettre les signaux de données à l'unité à microcontrôleur (211) par le biais de l'au moins un conducteur.

**11.** Câble de données (103) selon la revendication 10, le correspondant de communication (193) étant relié par le biais d'un troisième sous-ensemble capacitif (203 ; 205) à l'une des deux paires de conducteurs et par le biais d'un troisième sous-ensemble inductif (207 ; 209) à l'autre des deux paires de conducteurs.

**12.** Câble de données (103) selon l'une des revendications 8 à 11, le correspondant de communication (193) étant configuré pour, en réaction à un signal de veille, passer dans un état de veille.

**13.** Câble de données (103) selon l'une des revendications 8 à 12, le correspondant de communication (193) étant réalisé sous la forme d'une unité à microcontrôleur (193) supplémentaire ou sous la forme d'une mémoire programmable à lecture seule.

**14.** Procédé pour faire fonctionner un module d'entrée/sortie (105) selon l'une des revendications 2 à 7, comprenant les étapes suivantes :

- contrôle, au moyen de l'unité à microcontrôleur (211), permettant d'établir si une liaison de communication peut être établie entre l'unité à microcontrôleur (211) et un correspondant de communication (193) d'un câble de données (103) enfiché dans ladite partie de la connexion électrique par enfichage,
- commande des alimentations en tension continue au moyen de l'unité à microcontrôleur (211) de telle sorte que les alimentations en tension continue n'appliquent une tension continue respective aux contacts électriques correspondants des éléments de contact électriques que lorsque le résultat du contrôle a indiqué qu'une liaison de communication pourrait être établie avec un correspondant du câble de données (103).

**15.** Programme informatique, comprenant un code de programme destiné à mettre en oeuvre le procédé selon la revendication 14 lorsque le programme informatique est exécuté sur un ordinateur.

EP 3 338 404 B1

Fig. 1

25

Fig. 2

Fig. 3

**Fig. 4**

| | | | |
|---|---|---|---|
| 1005 | 1007 | 1001 | 1003 |

EP 3 338 404 B1

28

**Fig. 5**

| | | | | |
|---|---|---|---|---|
| 1005 | 1007 | 1101 | 1001 | 1003 |

**Fig. 6**

EP 3 338 404 B1

**Fig. 7**

EP 3 338 404 B1

**Fig. 8**

EP 3 338 404 B1

**Fig. 9**

**IN DER BESCHREIBUNG AUFGEFÜHRTE DOKUMENTE**

**In der Beschreibung aufgeführte Patentdokumente**

- DE 102015116802
- US 20130093444 A1
- US 6218930 B1

- US 20110217873 A1
- DE 102011087828 A1
- US 2004073597 A1